# EUROPÄISCHE PATENTANMELDUNG

(11) **EP 4 312 004 A1**
(43) Veröffentlichungstag der Anmeldung: **31.01.2024**
(21) Anmeldenummer: 22196518.9
(22) Anmeldetag: 20.09.2022
(51) Int. Cl.: G01F 23/284, G01J 5/00, G01K 13/00

(54) **ANSCHLUSSVORRICHTUNG, FÜLLSTANDMESSVORRICHTUNG UND TEMPERATURMESSVORRICHTUNG**

(30) Priorität: 25.07.2022 EP 22186671
(71) Anmelder: Brisco Systems GmbH, 8335 Hittnau (CH)
(72) Erfinder: GOSCH, Jürgen, 8330 Pfäffikon (CH)
(74) Vertreter: Vossius & Partner Patentanwälte Rechtsanwälte mbB

(57) **Zusammenfassung**

Die Erfindung betrifft eine Anschlussvorrichtung (10), die an einem Behälter (120), der zum Aufbewahren zumindest einer Flüssigkeit (122) eingerichtet ist, anbringbar ist. Die Anschlussvorrichtung (10) umfasst mindestens einen Anschlussgehäuse (12), der an dem Behälter montierbar ist und eine Mehrzahl von im oder am Anschlussgehäuse (12) integrierten Anschlussschnittstellen (26, 36, 38, 46, 48) aufweist. Jede Anschlussschnittstelle (26, 36, 38, 46, 48) ist dazu eingerichtet, mit einer Funktionsvorrichtung (22, 30, 32, 42, 44, 132, 136), die mit der Flüssigkeit (122) operativ zusammenwirkbar ist, um mindestens eine Funktion bereitzustellen, in Eingriffsverbindung gebracht zu werden, um die Funktionsvorrichtung (22, 30, 32, 42, 44, 132, 136) an dem Anschlussgehäuse (12) zu fixieren.

Die Erfindung betrifft außerdem eine Füllstandmessvorrichtung (42) und eine Temperaturmessvorrichtung (44).

## Beschreibung

Flüssigkeiten werden für eine Vielzahl von privaten und/oder industriellen Anwendungen und/oder Zwecken eingesetzt. Beispielsweise können Flüssigkeiten zum Kühlen und/oder Heizen eingesetzt werden. Ferner können Flüssigkeiten beispielsweise als Antriebsmittel und/oder Schmiermittel dienen. Eine Vielzahl von weiteren Anwendungen und/oder Zwecken von Flüssigkeiten, beispielsweise in der Pharmaindustrie, sind ebenfalls denkbar.

Flüssigkeiten werden häufig in einem Flüssigkeitsbehälter gespeichert bzw. gelagert, um bei Bedarf zumindest einen Teil der Flüssigkeit aus dem Behälter zu entnehmen und der gewünschten Applikation zuzuführen. Deshalb weisen derartige Flüssigkeitsbehälter häufig mindestens einen Abführanschluss zum Entnehmen oder Abführen zumindest eines Teils der Flüssigkeit aus dem Flüssigkeitsbehälter auf. Zusätzlich ist häufig an dem Flüssigkeitsbehälter mindestens ein Zuführanschluss vorgesehen, um dem Flüssigkeitsbehälter Flüssigkeit zuzuführen.

Ferner ist häufig vorgesehen, dass die in dem Behälter gespeicherte Flüssigkeit geprüft werden kann, beispielsweise um einen Zustand, beispielsweise eine Temperatur, der Flüssigkeit zu kontrollieren und/oder um potenziell gefährliche Zustände, beispielsweise chemische Reaktionen, der Flüssigkeit zu detektieren und/oder zu verhindern. Außerdem ist häufig ein Füllstandsensor vorgesehen, der einen Füllstand der Flüssigkeit in dem Behälter überwacht.

Aus dem Stand der Technik sind diverse Anschlussmittel zum Anschließen einer Vorrichtung, beispielsweise einer Messvorrichtung, oder mehrerer Vorrichtungen an einem Flüssigkeitsbehälter bekannt. Derartige Anschlussmittel sind häufig als Flansche konfiguriert. Die aus dem Stand derTechnik bekannten Anschlussmittel sind jedoch aus mehreren Gründen nachteilig. Beispielsweise ist die Montage der bekannten Anschlussmittel an dem Flüssigkeitsbehälter mit einem relativ hohen Aufwand verbunden. Ferner ist die Montage der bekannten Anschlussmittel relativ zeitintensiv und/oder kostenintensiv und/oder fehleranfällig. Ferner verursachen die aus dem Stand der Technik bekannten Anschlussmittel relativ hohe Materialkosten, beispielsweise auf Grund der relativ großen Materialmengen, die für die Flansche häufig benötigt werden. Ferner lassen die aus dem Stand der Technik bekannten Anschlussmittel keine oder nur relativ geringe Anpassungen zu, beispielsweise um andere und/oder zusätzliche Vorrichtungen an dem entsprechenden Flüssigkeitsbehälter anzubringen. Deshalb muss häufig ein neuer Flansch, der den bestehenden Flansch ersetzt, konfiguriert und angebracht werden, was ebenfalls zeitintensiv und/oder kostenintensiv ist.

Es ist deshalb wünschenswert, zumindest einen Nachteil der aus dem Stand der Technik bekannten Anschlussmittel, vorzugsweise zumindest einen der oben genannten Nachteile, zumindest teilweise zu verbessern.

Es ist deshalb eine Aufgabe der vorliegenden Erfindung, ein Anschlussmittel an einem Flüssigkeitsbehälter mit verbesserten Eigenschaften anzugeben.

Diese Aufgabe wird durch eine Anschlussvorrichtung gemäß den Merkmalen des Anspruchs 1 gelöst. Vorteilhafte Ausgestaltungen mit zweckmäßigen Weiterbildungen der Erfindung sind in den jeweiligen Unteransprüchen sowie in der nachfolgenden Beschreibung angegeben.

Die Anschlussvorrichtung kann an einem Behälter, der zum Aufbewahren zumindest einer Flüssigkeit eingerichtet ist, anbringbar sein. Der Behälter kann jede Art von Flüssigkeit aufbewahren. Vorzugsweise ist der Behälter dazu eingerichtet, Flüssigkeiten für industrielle Anwendungen aufzubewahren. Beispielsweise kann der Behälter zum Aufbewahren von Kühlflüssigkeiten, Heizflüssigkeiten, Schmierstoffflüssigkeiten, Beschichtungsflüssigkeiten, Kraftstoffflüssigkeiten oder/oder pharmazeutischen Flüssigkeiten eingerichtet sein. Weitere Flüssigkeitsarten, beispielsweise Flüssigkeiten für weitere Anwendungen und/oder Zwecke, die in dem Behälter aufbewahrt werden können, sind im Rahmen der vorliegenden Erfindung ebenfalls denkbar.

Die Anschlussvorrichtung kann mindestens ein Anschlussgehäuse aufweisen. Das Anschlussgehäuse kann an dem Behälter montierbarsein und eine Mehrzahl von im und/oder am Anschlussgehäuse integrierten Anschlussschnittstellen aufweisen. Das Anschlussgehäuse kann mehrere integral und/oder monolithisch ausgebildete Gehäuseteile aufweisen.

Jede Anschlussschnittstelle kann dazu eingerichtet sein, mit einer Funktionsvorrichtung, die mit der Flüssigkeit operativ zusammenwirkbar ist, um mindestens eine Funktion bereitzustellen, in Eingriffsverbindung gebracht zu werden, um die Funktionsvorrichtung an dem Anschlussgehäuse zu fixieren. Die Eingriffsverbindung zwischen der Funktionsvorrichtung und dem Anschlussgehäuse kann mindestens eine Formschlussverbindung und/oder mindestens eine Kraftschlussverbindung sein. Hierzu kann mindestens ein Verbindungselement, beispielsweise mindestens eine Schraubverbindung und/oder mindestens eine Einrastverbindung, vorgesehen sein, um die Funktionsvorrichtung mit dem Anschlussgehäuse in Eingriffsverbindung zu bringen. Mindestens ein Verbindungselement kann mindestens teilweise an der jeweiligen Anschlussschnittstelle integriert sein, vorzugsweise integral integriert. Beispielsweise kann die jeweilige Anschlussschnittstelle mindestens ein Gewinde aufweisen, das dazu eingerichtet ist, mit einem Gegengewinde, beispielsweise mit einem Gegengewinde einer Schraube, zusammenzuwirken, um die Funktionsvorrichtung an der Anschlussschnittstelle zu fixieren. Die Anschlussschnittstellen können jeweils dazu eingerichtet sein, die Funktionsvorrichtungen lösbar an dem Anschlussgehäuse zu fixieren. Die Anschlussschnittstellen können unterschiedlich konfiguriert sein, beispielsweise in deren Form, Dimensionen und/oder Verbindungsart, die vorgesehen ist, um die jeweilige Funktionsvorrichtung an der jeweiligen Anschlussschnittstelle zu fixieren. Dadurch kann die jeweilige Anschlussschnittstelle an die zu fixierende Funktionsvorrichtung angepasst werden. Die Verbindungsart kann beispielsweise eine kraftschlüssige Verbindung und/oder eine formschlüssige Verbindung umfassen. Ferner kann sich die Verbindungsart in mindestens einem Verbindungselement, das zum Fixieren der jeweiligen Funktionsvorrichtung an der jeweiligen Anschlussschnittstelle eingesetzt wird, unterscheiden. Das Verbindungselement kann beispielsweise als Gewinde, Schraube, Passung, beispielsweise Presspassung, und/oder Clip ausgebildet sein.

Durch das Vorsehen einer Mehrzahl von im und/oder am Anschlussgehäuse integrierten Anschlussschnittstellen zum Anbringen einer Mehrzahl von Funktionsvorrichtungen an dem Behälter kann eine kompakte und/oder einheitliche Montageeinheit für alle, oder zumindest für mehrere, Funktionsvorrichtungen, die an dem Behälter angebracht werden müssen/sollen, bereitgesellt werden. Dadurch kann der Montageaufwand zum Anbringen der entsprechenden Funktionsvorrichtungen an dem Behälter reduziert werden. Außerdem kann dadurch ein Ausbau der Funktionsvorrichtungen, oder zumindest einer Funktionsvorrichtung, beispielsweise um die jeweilige Funktionsvorrichtung zu warten und/oder auszutauschen, erleichtert werden. Beispielweise kann die Anschlussvorrichtung, oder zumindest eine Untereinheit derselben, welche eine, mehrere oder alle Funktionsvorrichtungen trägt, als kohärente Einheit entnommen werden, beispielsweise um die Anschlussvorrichtung bzw. die Funktionsvorrichtungen zu warten und/oder zu ersetzen.

Im Gegensatz zur vorliegenden Erfindung, werden im Stand der Technik die einzelnen Anschlussmittel bzw. die einzelnen Funktionsvorrichtungen zumindest teilweise individuell an jedem Flüssigkeitsbehälter konfiguriert und angebracht. Hierfür weist der Behälter bzw. jedes Anschlussmittel, beispielweise jeder Flansch, häufig eine eigene Anschlussschnittstelle auf, um das Anschlussmittel einzeln an dem Behälter anzubringen. Beispielsweise wird eine entsprechende Zuführvorrichtung zum Zuführen von Flüssigkeiten in den Behälter und/oder eine entsprechende Abführvorrichtung zum Abführen von Flüssigkeit aus dem Behälter in der Regel einzeln bzw. individuell an dem jeweiligen Behälter angebracht. Zum einen ist dies relativ zeitintensiv und/oder kostenintensiv. Außerdem ist eine Einzelanbringung der Anschlussmittel bzw. derjeweiligen Funktionsvorrichtung meist auch fehleranfällig. Ferner ist in der Regel für jedes Anschlussmittel, oder zumindest für eine Mehrzahl der für einen Behälter vorgesehenen Anschlussmittel, zumindest ein eigenes Befestigungsmittel, beispielsweise mindestens eine Schraube und/oder sonstige Verbindungsmittel, vorgesehen. Dadurch weist die Installation der Anschlussmittel meist eine relativ hohe Anzahl an Befestigungsmitteln auf. Dadurch steigt in der Regel das Risiko eines Versagens und/oder einer fehlerhaften Montage des jeweiligen Befestigungsmittels, was beispielsweise zu einem Lösen derjeweiligen Befestigung des jeweiligen Anschlussmittels führen kann.

Ferner weisen die entsprechenden Vorrichtungen häufig elektrische und/oder elektronische Komponenten auf, beispielsweise mindestens eine Steuervorrichtung und/oder ein elektrisches Ventil. Deshalb wird in der Regel an jeder Vorrichtung entsprechend mindestens ein Kabel angebracht, beispielsweise um die jeweilige Vorrichtung mit Strom zu versorgen. Dies erfordert in der Regel einen relativ hohen Montageaufwand und/oder führt zu einem relativ großen Verkabelungsaufwand. Ferner kann dies zu einem relativ hohen Risiko einer Kabelbeschädigung, beispielsweise eines Kabelbruchs, führen.

Die Anschlussvorrichtung kann in verschiedenen Ausführungen und/oder für verschiedene Anwendungen und/oder Zwecke konfiguriert sein. Beispielsweise können die Anschlussschnittstellen den Funktionsvorrichtungen, die für eine bestimmte Anwendung und/oder einen bestimmten Zweck vorgesehen sind, entsprechend ausgelegt sein. Beispielsweise kann/können die Anzahl und/oder die Form und/oder die Dimensionen einer Anschlussschnittstelle oder mehrerer Anschlussschnittstellen an die entsprechende Anwendung und/oder den entsprechenden Zweck der jeweiligen Flüssigkeit, die in dem Behälter angeordnet ist, angepasst werden.

Das Anschlussgehäuse kann einteilig, d.h., als kohärente Einheit, ausgebildet sein. Das Anschlussgehäuse kann als integrale Einheit ausgebildet sein. Alternativ kann das Anschlussgehäuse aus mehreren zusammengesetzten Komponenten aufgebaut sein, die eine einteilige, d.h. kohärente, Einheit bilden.

Die Anschlussvorrichtung kann als Modul, vorzugsweise als individuell zusammensetzbares Modul, konfiguriert sein. Das Modul kann mehrere Sensoren aufweisen, beispielsweise mindestens einen Temperatursensor und/oder mindestens einen Füllstandsensor, der/die an den Anschlussschnittstellen angebracht ist/sind. Das gesamte Modul kann dazu eingerichtet sein, einheitlich, d.h. einschließlich der vorgesehenen Funktionsvorrichtungen, an dem Behälter montiert zu werden. Das Modul kann mehrere Untermodule aufweisen, die jeweils nach Bedarf und/oder Anwendung, beispielsweise je nach Bedarf und/oder Anwendung der jeweils in dem Behälter angeordneten Flüssigkeit, bereitgestellt oder ausgelassen werden können.

Das Anschlussgehäuse kann aus diversen Materialen hergestellt sein. Beispielsweise kann das Anschlussgehäuse zumindest teilweise, vorzugsweise vollständig, aus Kunststoff hergestellt sein. Alternativ kann das Anschlussgehäuse beispielsweise zumindest teilweise, vorzugsweise vollständig, aus Metall hergestellt sein. Vorzugsweise ist das Anschlussgehäuse aus einem Material hergestellt, der für die entsprechende Anwendung geeignet bzw. mit der in dem Behälter angeordneten Flüssigkeit verträglich ist. Alternativ, oder zusätzlich kann das Anschlussgehäuse, und optional auch weitere Komponenten der Anschlussvorrichtung, mit mindestens einem Beschichtungsmittel beschichtet sein, beispielsweise um eine Verträglichkeit mit der in dem Behälter angeordneten Flüssigkeit zu erhöhen.

Das Anschlussgehäuse kann mittels mindestens eines Montageelements an dem Behälter montiert werden. Beispielsweise können hierzu zerstörungsfrei lösbare Befestigungselemente eingesetzt werden, beispielsweise mindestens eine Schraubverbindung und/oder mindestens eine Einrastvorrichtung, beispielsweise mindestens ein Clip. Denkbar sind jedoch auch feste Verbindungen zwischen dem Anschlussgehäuse und dem Behälter, die ein zerstörungsfreies Lösen des Anschlussgehäuses von dem Behälter verhindern können. Beispielweise kann das Anschlussgehäuse über mindestens eine Schweißverbindung an dem Behälter befestigt sein. Eine Klebeverbindung, die das Anschlussgehäuse an dem Behälter fixiert, ist ebenfalls denkbar.

Das Montageelement ist vorzugsweise integral und/oder monolithisch mit dem Anschlussgehäuse ausgebildet.

Die Anschlussvorrichtung ist vorzugsweise dazu eingerichtet, an einer Oberseite des Behälters montiert zu werden. Alternativ, oder zusätzlich, kann die Anschlussvorrichtung dazu eingerichtet sein, an einer Unterseite und/oder an einer seitlichen Fläche des Behälters montiert zu werden. Vorzugsweise ist die Anschlussvorrichtung an einer Öffnung, die in mindestens einer Wand, beispielsweise in einem Deckel, des Behälters definiert ist, angeordnet und kann sich zumindest teilweise durch die Öffnung erstrecken.

Die Anschlussschnittstellen können dazu eingerichtet sein, mit einer Vielzahl von Funktionsvorrichtung kompatibel zu sein, um die jeweilige Funktionsvorrichtung an dem Anschlussgehäuse zu fixieren. Unter dem Begriff "Funktionsvorrichtung" ist jede Vorrichtung zu verstehen, die durch Zusammenwirkung, beispielsweise durch Wechselwirkung, mit der Flüssigkeit eine Funktion, beispielsweise eine Messung eines Parameters der Flüssigkeit und/oder eine Strömungsführung und/oder eine Strömungssteuerung der Flüssigkeit, durchführt bzw. erfüllt. Unter dem Begriff "operativ zusammenwirkbar" ist jede Art von Zusammenwirken zwischen der Flüssigkeit und der jeweiligen Funktionsvorrichtung zu verstehen. Das Zusammenwirken zwischen der Flüssigkeit und der jeweiligen Funktionsvorrichtung kann durch Kontakt zwischen der Flüssigkeit und der jeweiligen Funktionsvorrichtung und/oder kontaktlos geschehen. Beispielsweise kann die Flüssigkeit einen aktiven Anteil, beispielsweise durch physischen Kontakt mit zumindest einer der Funktionsvorrichtungen, beispielsweise indem die Flüssigkeit zumindest teilweise durch und/oder gegen die jeweilige Funktionsvorrichtung strömt, und/oder einen passiven Anteil, beispielsweise indem die jeweilige Funktionsvorrichtung kontaktlos eine Eigenschaft, beispielsweise eine Temperatur, der Flüssigkeit detektiert, an dem operativen Zusammenwirken beitragen.

Die Funktionen der Funktionsvorrichtungen können beispielsweise das Messen mindestens eines Parameters, z.B. mindestens einer Temperatur der Flüssigkeit, mindestens eines Füllstands der Flüssigkeit, mindestens eines Drucks der Flüssigkeit, etc. umfassen. Die jeweilige Funktionsvorrichtung kann dazu eingerichtet sein, den mindestens einen Parameter über Kontakt mit der Flüssigkeit und/oder kontaktlos zu messen. Alternativ, oder zusätzlich, können die Funktionen der Funktionsvorrichtungen generell eine Interaktion mit der Flüssigkeit, unabhängig von einem Messen von Parametern, umfassen. Beispielsweise kann die Funktion der Funktionsvorrichtung(en) eine Kraftübertragung zwischen der Flüssigkeit und der jeweiligen Funktionsvorrichtung umfassen, beispielsweise durch Rühren der Flüssigkeit und/oder durch Zu- und/oder Abführen zumindest eines Teils der Flüssigkeit in den Behälter bzw. aus dem Behälter.

Zumindest eine der Funktionsvorrichtungen kann als Sensor ausgebildet sein, der dazu eingerichtet sein kann, mindestens eine Eigenschaft, beispielsweise mindestens eine Temperatur und/oder mindestens einen Druck der Flüssigkeit, zu detektieren. Alternativ, oder zusätzlich, kann eine der Funktionsvorrichtungen als Zuführ- und/oder Abführvorrichtung, beispielsweise als Ventil, konfiguriert sein.

Vorzugsweise sind die Anschlussschnittstellen an und/oder in dem Anschlussgehäuse integral ausgebildet. Alternativ können die Anschlussschnittstellen an der Anschlussvorrichtung bzw. an dem Anschlussgehäuse befestigbar, vorzugsweise lösbar befestigbar, sein. Vorzugsweise können die Anschlussschnittstellen modulartig an der Anschlussvorrichtung bzw. an dem Anschlussgehäuse anbringbar, vorzugsweise lösbar anbringbar, sein. Dadurch kann beispielsweise die Anzahl der an der Anschlussvorrichtung vorgesehenen Anschlussschnittstellen individuell angepasst werden, beispielsweise entsprechend der jeweiligen Anwendung der Anschlussvorrichtung bzw. der Flüssigkeit.

Vorzugsweise weist die Anschlussvorrichtung mindestens eine Messvorrichtung zum Messen mindestens einer Eigenschaft der in dem Behälter angeordneten Flüssigkeit und/oder eines auf der Flüssigkeit angeordneten Schaums und/oder einer weiteren zumindest teilweise in der Flüssigkeit angeordneten Materie auf. Vorzugsweise ist die Messvorrichtung an einer der Anschlussschnittstellen fixierbar. Die Messvorrichtung kann dazu eingerichtet sein, zumindest einen Parameter der Flüssigkeit, des Schaums und/oder der weiteren Materie, beispielsweise zumindest einen Druck, eine Temperatur, eine Strömungsgeschwindigkeit, etc., zu detektieren. Die weitere Materie kann beispielweise zumindest eine weitere Flüssigkeit, zumindest einen Feststoff, beispielweise zumindest einen unerwünschten Gegenstand, beispielweise Partikel, und/oder ein gasförmiges Medium umfassen.

Vorzugsweise umfasst die mindestens eine Messvorrichtung eine Füllstandmessvorrichtung zum Messen von Füllständen der Flüssigkeit und/oder zum Messen einer Höhe eines auf einer Oberfläche der Flüssigkeit angeordneten Schaumes. Die Füllstandmessvorrichtung kann gemäß einer der hierin beschriebenen Ausführungen konfiguriert sein.

Die Füllstandmessvorrichtung kann den Füllstand der Flüssigkeit überwachen, so dass beispielsweise anhand des angegeben Füllstands eine Mindestflüssigkeitsmenge und/oder eine Maximalflüssigkeitsmenge in dem Behälter eingehalten werden kann/können. Außerdem kann durch die Füllstandmessvorrichtung eine Schaumentwicklung auf der Oberfläche der Flüssigkeit überwacht werden, beispielsweise um Gegenmaßnahmen einleiten zu können, um beispielsweise eine Schaummenge in dem Behälter zu reduzieren oder zumindest zu begrenzen. Die Füllstandmessvorrichtung kann dazu eingerichtet sein, einen Füllstand der Flüssigkeit und/oder eine Höhe des auf der Oberfläche der Flüssigkeit angeordneten Schaumes automatisch zu überwachen und/automatisch ein Warnsignal abzugeben, wenn ein oberer Grenzwert des Füllstands bzw. der Schaumhöhe überschritten und/oder ein unterer Grenzwert des Füllstands bzw. der Schaumhöhe unterschritten wird. Hierzu kann die Füllstandmessvorrichtung mindestens eine Steuervorrichtung aufweisen. Alternativ kann die Anschlussvorrichtung mindestens eine Steuervorrichtung, vorzugsweise eine zentrale Steuereinheit, die mit der Füllstandmessvorrichtung kommunikativ verbindbar ist, um Daten und/oder Signale von der Füllstandmessvorrichtung zur Steuervorrichtung und/oder von der Steuervorrichtung zur Füllstandmessvorrichtung zu übertragen, aufweisen.

Vorzugsweise umfasst die mindestens eine Messvorrichtung eine Temperaturmessvorrichtung zum Messen zumindest einer Temperatur der Flüssigkeit, die in einem Behälter angeordnet ist. Die Temperaturmessvorrichtung kann gemäß einer der hierin beschriebenen Ausführungen konfiguriert sein.

Dadurch können beispielsweise Temperaturunterschiede innerhalb der Flüssigkeit und/oder Temperaturänderungen und/oder zeitliche Temperaturverläufe zumindest eines Bereichs der Flüssigkeit detektiert werden. Dadurch kann beispielsweise die Qualität der Flüssigkeit überwacht werden. Beispielsweise kann ein optimaler und/oder ein zulässiger Temperaturbereich der Flüssigkeit überwacht und/oder eingehalten werden, beispielsweise durch Aktivierung einer Kühlung oder einer Erwärmung der Flüssigkeit. Dadurch kann sichergestellt werden, dass Flüssigkeiten durch entsprechende Temperaturen nicht beeinträchtigt werden können bzw. dass die Beeinträchtigungen zumindest reduziert werden können. Alternativ, oder zusätzlich, können chemische Reaktionen durch eine Detektion einer Temperaturänderung der Flüssigkeit, beispielsweise einer Erwärmung der Flüssigkeit, insbesondere bei exothermen Reaktionen, erkannt und verhindert, oder zumindest unterbunden, werden. Alternativ, oder zusätzlich, können durch entsprechende Temperaturmessungen, vorzugsweise kontinuierliche Temperaturmessungen, Strömungen der Flüssigkeit im Behälter detektiert werden. Alternativ, oder zusätzlich, können dadurch ferner Fremdmedien, beispielsweise Fremdkörper, beispielsweise Partikel, im Behälter detektiert werden.

Die Temperaturmessvorrichtung ist vorzugsweise dazu eingerichtet, zumindest eine Temperatur der Flüssigkeit kontaktlos zu messen. Hierzu kann die Temperaturmessvorrichtung mindestens ein Infrarot-Thermometer aufweisen. Alternativ kann die Temperaturmessvorrichtung dazu eingerichtet sein, zumindest eine Temperatur der Flüssigkeit durch Kontakt mit der Flüssigkeit zu messen. Hierzu kann die Temperaturmessvorrichtung mindestens einen Kontakttemperaturfühler aufweisen.

Die Temperaturmessvorrichtung kann dazu eingerichtet sein, eine Temperaturverteilung in einem Bereich der Flüssigkeit, vorzugsweise an einer Oberfläche der Flüssigkeit, zu messen. Die Temperaturmessvorrichtung kann dazu eingerichtet sein, eine Temperaturverteilung in mindestens einer Ebene zu bestimmen, wobei die Ebene vorzugsweise entlang einer Flüssigkeitsoberfläche der Flüssigkeit verläuft. Dadurch kann eine mehrdimensionale Temperaturverteilung in einem Bereich der Flüssigkeit, vorzugsweise an einer Flüssigkeitsoberfläche der Flüssigkeit, gemessen werden. Mit anderen Worten, die Temperaturmessvorrichtung kann dazu eingerichtet sein, ein 2D-Wärmetemperaturbild in zumindest einem Bereich der Flüssigkeit, vorzugsweise an einer Flüssigkeitsoberfläche der Flüssigkeit, zu erfassen. Temperaturmessvorrichtungen zum Messen von Temperaturen von Flüssigkeiten sind generell aus dem Stand der Technik bekannt. Jedoch sind die bekannten Temperaturmessvorrichtungen für Flüssigkeiten in der Regel lediglich für punktförmige Messungen ausgelegt. Im Gegensatz hierzu, stellt die vorliegende Erfindung eine Temperaturmessvorrichtung bereit, die eine Temperaturverteilung der Flüssigkeit in mindestens einer Ebene bestimmen kann. Dadurch lassen sich die Temperatur(en) in effizienter und/oder effektiver Weise über einen Bereich der Flüssigkeit bestimmen, beispielsweise um Temperaturverteilungen in der Flüssigkeit bzw. an der Oberfläche der Flüssigkeit zu erfassen. Dadurch können beispielsweise chemische Reaktionen in der Flüssigkeit und/oder Strömungen der Flüssigkeit im Behälter effizienter und/oder effektiver festgestellt werden.

Vorzugsweise weist die Anschlussvorrichtung auf:
mindestens einen Zuführanschluss zum Anschließen mindestens einer Zuführleitung zum Zuführen von Flüssigkeit in den Behälter, wobei der Zuführanschluss an einer der Anschlussschnittstellen fixierbar ist; und/oder
mindestens einen Abführanschluss zum Anschließen mindestens einer Abführleitung zum Abführen von Flüssigkeit aus dem Behälter, wobei der Abführanschluss an einer der Anschlussschnittstellen fixierbar ist.

Durch den Zuführanschluss kann Flüssigkeit in den Behälter geleitet werden, beispielsweise um eine Entnahme von Flüssigkeit aus dem Behälter zumindest teilweise auszugleichen. Durch den Abführanschluss kann Flüssigkeit aus dem Behälter entnommen werden, beispielsweise um zumindest einen Teil der Flüssigkeit einer Anwendung zuzuführen und/oder um zumindest einen Teil der Flüssigkeit zu überprüfen und/oder zu überwachen, beispielsweise durch Entnahme einer Probe der Flüssigkeit.

Vorzugsweise ist die Anschlussvorrichtung zu einer kohärenten Einheit vormontierbar, bevor die Anschlussvorrichtung an dem Behälter angebracht wird. Beispielsweise kann die Anschlussvorrichtung in einer Fertigungsanlage, beispielsweise beim Hersteller der Anschlussvorrichtung, vorzugsweise automatisiert oder zumindest teilweise automatisiert, zu einer kohärenten Einheit vormontiert oder zumindest teilweise vormontiert werden. Dadurch kann der Montage- bzw. Zusammenbauaufwand der Anschlussvorrichtung an dem Behälter reduziert werden. Außerdem können dadurch Montagefehler, die bei der Montage der Anschlussvorrichtung an dem Behälter entstehen können, reduziert werden. Vorzugsweise ist die Anschlussvorrichtung als vormontierte Einheit an einem Deckel, einem Boden und/oder einer Seitenwand des Behälters montierbar.

Vorzugsweise weist die Anschlussvorrichtung ferner mindestens eine Kommunikationseinheit auf, die dazu eingerichtet ist, eine Kommunikationsverbindung, vorzugsweise eine kabellose Kommunikationsverbindung, zwischen mindestens einer Komponente der Anschlussvorrichtung und einem externen Gerät bereitzustellen (z.B. einem Computer oder Datenverarbeitungssystem). Alternativ, oder zusätzlich, kann die Kommunikationseinheit dazu eingerichtet sein, eine Kommunikationsverbindung zwischen Komponenten der Anschlussvorrichtung, beispielsweise zwischen zwei Sensoren der Anschlussvorrichtung, bereitzustellen. Die Kommunikationsverbindung kann dazu dienen, Informationen, Daten und/oder Signale auszutauschen bzw. zu übertagen. Eine kabellose Kommunikationsverbindung kann beispielsweise über Wifi, Bluetooth, LoRa (Long Range), NarrowBand, und/oder NarrowBand IoT bereitgestellt werden.

Vorzugsweise weist der Zuführanschluss mindestens ein Zuführventil auf, das dazu eingerichtet ist, eine Zufuhr von Flüssigkeit in den Behälter über den Zuführanschluss zu steuern. Das Zuführventil kann an dem oder in dem Anschlussgehäuse montierbar sein. Vorzugsweise ist das Zuführventil derart montierbar, dass das Zuführventil zumindest teilweise, vorzugsweise vollständig, vom Anschlussgehäuse umschlossen ist, im montierten Zustand des Zuführventils. Das Zuführventil kann elektrisch steuerbar und/oder drucksteuerbar sein. Das Zuführventil kann mit einer Füllstandmessvorrichtung, vorzugsweise mit der hierin beschriebenen Füllstandmessvorrichtung, kommunikativ verbindbar sein. Vorzugsweise weist die Anschlussvorrichtung zumindest eine Steuervorrichtung auf, die dazu eingerichtet ist, das Zuführventil basierend auf einem Füllstand der Flüssigkeit, vorzugsweise automatisch, anzusteuern.

Vorzugsweise weist der Abführanschluss mindestens ein Abführventil auf, das dazu eingerichtet ist, eine Abfuhr von Flüssigkeit aus dem Behälter über den Abführanschluss zu steuern. Das Abführventil ist vorzugsweise im Anschlussgehäuse montierbar und/oder wird vom Anschlussgehäuse zumindest teilweise, vorzugsweise vollständig, umschlossen, im montierten Zustand des Abführventils.

Vorzugsweise weist die Anschlussvorrichtung ferner ein Not-Stopp-Ventil auf, das dazu eingerichtet ist, eine Zufuhr von Flüssigkeit in den Behälter zu verhindern, oder zumindest zu begrenzen, und/oder eine Abfuhr von Flüssigkeit aus dem Behälter zu veranlassen, wenn ein Füllstand der in dem Behälter angeordneten Flüssigkeit einen Schwellwert, vorzugsweise einen vorbestimmten Schwellwert, überschreitet. Vorzugsweise ist das Not-Stopp-Ventil stromlos antreibbar. Das Not-Stopp-Ventil ist vorzugsweise im Anschlussgehäuse montierbar. Zumindest ein Ventilkörper des Not-Stopp-Ventils kann vom Anschlussgehäuse zumindest teilweise, vorzugsweise vollständig, umschlossen sein, im montierten Zustand des Not-Stopp-Ventils.

Vorzugsweise ist zumindest eines der Ventile, vorzugsweise zumindest das Zuführventil und das Abführventil, vorzugsweise alle Ventile, elektrisch antreibbar. Alternativ kann zumindest eines der Ventile, vorzugsweise zumindest das Zuführventil und das Abführventil, vorzugsweise alle Ventile, jeweils ein druckgesteuertes Ventil sein.

Die Anschlussvorrichtung kann mindestens einen Einlass aufweisen, an dem mindestens ein Einlassrohr oder -schlauch anbringbar ist, um Flüssigkeit über den Zuführanschluss in die Anschlussvorrichtung und anschließend über den Einlass und das Einlassrohr bzw. den Einlassschlauch in den Behälter zu leiten. Die Anschlussvorrichtung kann hierzu eine Einlass-Fluidverbindung zwischen dem Zuführanschluss und dem Einlass aufweisen. Die Einlass-Fluidverbindung ist vorzugsweise zumindest teilweise, vorzugsweise vollständig, vom Anschlussgehäuse umschlossen. In anderen Worten kann die Einlass-Fluidverbindung in dem Anschlussgehäuse angeordnet sein und/oder durch das Anschlussgehäuse verlaufen.

Die Anschlussvorrichtung kann mindestens einen Auslass aufweisen, an dem mindestens ein Auslassrohr oder -schlauch anbringbar ist, um Flüssigkeit über das Auslassrohr bzw. den Auslassschlauch und anschließend über den Auslass und den Abführanschluss aus dem Behälter zu leiten. Die Anschlussvorrichtung kann hierzu eine Auslass-Fluidverbindung zwischen dem Abführanschluss und dem Auslass aufweisen. Die Auslass-Fluidverbindung ist vorzugsweise zumindest teilweise, vorzugsweise vollständig, vom Anschlussgehäuse umschlossen. In anderen Worten kann die Auslass-Fluidverbindung in dem Anschlussgehäuse angeordnet sein und/oder durch das Anschlussgehäuse verlaufen.

Vorzugsweise weist die Anschlussvorrichtung ferner auf:
mindestens einen Zuführschlauch, der mit dem Zuführanschluss verbindbar ist und sich in einen Innenraum des Behälters erstreckt, wenn die Anschlussvorrichtung an dem Behälter angebracht ist, um Flüssigkeit über den Zuführanschluss in den Behälter zuzuführen; und/oder
mindestens einen Abführschlauch, der mit dem Abführanschluss verbindbar ist und sich in einen Innenraum des Behälters erstreckt, wenn die Anschlussvorrichtung an dem Behälter angebracht ist, um Flüssigkeit über den Abführanschluss aus dem Behälter abzuführen.

Der Zuführschlauch kann direkt, d.h. durch Kontakt zwischen dem Zuführschlauch und Zuführanschluss, oder indirekt, d.h., über zumindest eine Zwischenkomponente, mit dem Zuführanschluss verbindbar sein. Beispielsweise kann der Zuführanschluss an einer Oberseite des Anschlussgehäuses angeordnet sein, wobei der Zuführschlauch an einer Öffnung, einem Kanal oder einem Anschlussstück, die/der/das an einer Unterseite des Anschlussgehäuses angeordnet ist und mit dem Zuführanschluss an der Oberseite des Anschlussgehäuses in Fluidverbindung steht, anbringbar sein kann. Dieselbe Konfiguration kann auch für den Abführanschluss und den Abführschlauch umgesetzt werden.

Vorzugsweise ist/sind der Zuführschlauch und/oder der Abführschlauch flexibel und/oder biegsam ausgebildet. Dadurch kann/können der Zuführschlauch und/oder der Abführschlauch unabhängig von der Position und/oder Orientierung des Zuführanschlusses bzw. des Abführanschlusses in dem Behälter platziert bzw. geführt werden, beispielsweise um einen relativ großen Abstand zwischen dem jeweiligen offenen Ende des Zuführschlauchs und des Abführschlauchs, die in der Flüssigkeit angeordnet sind, zu ermöglichen. Dies kann das Entnehmen von Flüssigkeit aus dem Behälter und das Zuführen von Flüssigkeit in den Behälter erleichtern. Dadurch kann beispielweise ein Mindestabstand zwischen dem offenen Ende des Zuführschlauchs und dem offenen Ende des Abführschlauchs bewirkt werden, beispielsweise um negative Wechselwirkungen zwischen dem Zuführen und dem Abführen von Flüssigkeit zu verhindern oder zumindest zu reduzieren. Hierzu kann der Behälter mindestens ein Fixierelement aufweisen, um jeweils den Zuführschlauch und/oder den Abführschlauch an einem Bereich des Behälters, vorzugsweise an einer Innenwand des Behälters, zu fixieren. Das offene Ende des Zuführschlauchs und/oder das offene Ende des Abführschlauchs ist/sind vorzugsweise in einem Abstand von 20 cm oder weniger, bevorzugter 10 cm oder weniger von einer Seitenwand des Behälters beabstandet angeordnet. Dies kann, beispielsweise durch eine flexible Ausbildung des Zuführschlauchs und/oder des Abführschlauchs und/oder durch eine Fixierung des Zuführschlauchs und/oder des Abführschlauchs an einem Bereich des Behälters, vorzugsweise an einer Innenwand des Behälters, erreicht werden.

Vorzugsweise weist die Anschlussvorrichtung mindestens einen Filter zum Filtern einer Flüssigkeit, die in dem Behälter angeordnet ist, auf. Vorzugsweise ist der Filter an einer der Anschlussschnittstellen fixierbar. Der Filter ist vorzugsweise im Anschlussgehäuse montierbar. Alternativ, oder zusätzlich, wird der Filter zumindest teilweise, vorzugsweise vollständig, vom Anschlussgehäuse umschlossen, im montierten Zustand des Filters. Der Filter kann dazu eingerichtet sein, zugeführte Flüssigkeit zu filtern und/oder abgeführte Flüssigkeit zu filtern.

Vorzugsweise weist die Anschlussvorrichtung einen Stromversorgungsanschluss auf, um mindestens eine an der Anschlussvorrichtung angebrachten Komponente, vorzugsweise alle elektrisch angetriebenen Komponenten der Anschlussvorrichtung, mit Strom zu versorgen. Der Stromversorgungsanschluss ist vorzugsweise am Anschlussgehäuse vorgesehen. Beispielsweise kann der Stromversorgungsanschluss ein sich vom Anschlussgehäuse erstreckendes Kabel und/oder eine am oder im Anschlussgehäuse vorgesehene Steckbuchse aufweisen.

Vorzugsweise weist die Anschlussvorrichtung eine Steuereinheit auf, die dazu eingerichtet ist: bei einem offenen Zustand des Zuführventils, in dem das Zuführventil eine Zufuhr von Flüssigkeit über den Zuführanschluss in den Behälter zulässt, und einem geschlossenen Zustand des Abführventils, in dem das Abführventil eine Abfuhr von Flüssigkeit über das Abführventil aus dem Behälter verhindert, mindestens einen Soll-Füllstand der Flüssigkeit in dem Behälter in Abhängigkeit von einer Zuflussrate von Flüssigkeit über den Zuführanschluss in den Behälter zu bestimmen;
den Soll-Füllstand mit dem gemessenen Füllstand der Flüssigkeit in dem Behälter, vorzugsweise kontinuierlich, zu vergleichen; und
ein Schließsignal zu generieren, um ein Schließen des Zuführventils zu veranlassen, wenn der gemessene Füllstand von dem Soll-Füllstand abweicht, vorzugsweise um zumindest einen vorbestimmten Abweichungswert.

Dadurch können beispielsweise Flüssigkeitsleckagen am Behälter detektiert und entsprechend eine Zufuhr von Flüssigkeit in den Behälter unterbunden werden, um weitere Flüssigkeitsverluste zu verhindern oder zumindest zu reduzieren. Die Steuereinheit kann dazu eingerichtet sein, den Soll-Füllstand automatisch, vorzugsweise dynamisch, anzupassen, beispielsweise basierend auf zumindest einem Kriterium, beispielsweise der zu erwartenden Flüssigkeitsmenge, die in Zukunft und/oder für eine bestimme Anwendung benötigt wird.

Außerdem ist es eine Aufgabe dervorliegenden Erfindung, eine verbesserte Überwachung von Flüssigkeiten bereitzustellen.

Diese Aufgabe wird durch eine Füllstandmessvorrichtung gemäß den Merkmalen des unabhängigen Anspruchs 8 gelöst. Vorteilhafte Ausgestaltungen mit zweckmäßigen Weiterbildungen der Erfindung sind in den jeweiligen Unteransprüchen sowie in der nachfolgenden Beschreibung angegeben.

Die Füllstandmessvorrichtung kann zum Messen von Füllständen zumindest einer Flüssigkeit mit zumindest einem zumindest bereichsweise auf einer Oberfläche der Flüssigkeit angeordneten Schaum eingerichtet sein. Mit anderen Worten, die Füllstandmessvorrichtung kann dazu eingerichtet sein, Füllstände zumindest einer Flüssigkeit zu messen, selbst wenn auf einer Oberfläche der Flüssigkeit Schaum angeordnet ist. Dies umfasst auch eine Eignung der Füllstandmessvorrichtung, Füllstände der Flüssigkeit zu messen, wenn auf einer Oberfläche der Flüssigkeit kein Schaum oder nur wenig Schaum angeordnet ist. Die Flüssigkeit mit dem auf der Oberfläche der Flüssigkeit angeordneten Schaum ist beim Messen vorzugsweise in einem Behälter, vorzugsweise in einem Tank, angeordnet.

Die Füllstandmessvorrichtung kann mindestens einen Signalgenerator aufweisen, der dazu eingerichtet ist, mindestens ein Messsignal zu generieren und in Richtung der Flüssigkeitsoberfläche und, falls vorhanden, des darauf angeordneten Schaums abzugeben. Der Signalgenerator kann dazu eingerichtet sein, mindestens ein Radarsignal zu generieren und in Richtung der Flüssigkeitsoberfläche und des darauf angeordneten Schaums abzugeben. Der Signalgenerator kann dazu eingerichtet sein, dass mindestens eine Messsignal kontinuierlich und/oder intermittierend, beispielsweise in Form von mehreren sequenziell abgegebenen Messsignalen, abzugeben. Das Messsignal weist vorzugsweise eine Signalfrequenz von 60 GHz auf. Weitere Signalfrequenzen, d.h. höhere oder niedrigere Signalfrequenzen, sind ebenfalls denkbar im Rahmen der vorliegenden Erfindung. Der Signalgenerator kann dazu eingerichtet sein, die Signalfrequenz des Messsignals zu ändern bzw. anzupassen, beispielsweise in Abhängigkeit von mindestens einer Eigenschaft der Flüssigkeit. Der Signalgenerator kann dazu eingerichtet sein, mehrere Messsignale abzugeben. Alternativ, oder zusätzlich, kann die Füllstandmessvorrichtung eine Mehrzahl von Signalgeneratoren aufweisen, die jeweils dazu eingerichtet sind, mindestens ein Messsignal zu generieren und in Richtung der Flüssigkeitsoberfläche und, falls vorhanden, des darauf angeordneten Schaums abzugeben. Die Messsignale können mit unterschiedlichen Signaleigenschaften, beispielsweise mit unterschiedlichen Signalfrequenzen und/oder Amplituden, generiert und abgegeben werden.

Ferner kann die Füllstandmessvorrichtung mindestens einen Signalempfänger aufweisen, der dazu eingerichtet ist, das Messsignal bzw. die Messignale nach mindestens einer Reflektion des Messsignals bzw. der Messsignale an der Flüssigkeitsoberfläche und/oder an einem Bereich des Schaumes zu detektieren. Vorzugsweise sind der Signalgenerator und der Signalempfänger in einer, vorzugsweise kohärenten, Messeinheit integriert.

Außerdem kann die Füllstandmessvorrichtung mindestens eine Auswerteeinheit aufweisen, die dazu eingerichtet ist, einen Füllstand der Flüssigkeit und eine Höhe des auf der Flüssigkeitsoberfläche angeordneten Schaumes basierend auf dem detektierten Messsignal bzw. den detektierten Messsignalen zu bestimmen. Hierzu kann die Auswerteeinheit mindestens einen Prozessor aufweisen, der dazu eingerichtet ist, das Messsignal bzw. die Messsignale zu verarbeiten und/oder auszuwerten.

Schaum entsteht in der Regel durch eine Einlagerung von Gasblasen in einer Flüssigkeit und kann bei nahezu allen Flüssigkeiten auftreten. Durch die hierin beschriebene Füllstandmessvorrichtung können insbesondere Füllstände von Flüssigkeiten unabhängig davon, ob auf einer Oberfläche der Flüssigkeit ein Schaum angeordnet ist oder nicht, gemessen werden. Die hierin beschriebene Füllstandmessvorrichtung kann somit effektiv den Füllstand einer Flüssigkeit durch einen auf der Flüssigkeitsoberfläche angeordneten Schaum messen.

Im Gegensatz hierzu, können die aus dem Stand der Technik bekannten Füllstandsensoren in der Regel Füllstände von Flüssigkeiten nicht, oder zumindest nur mit geringerer Zuverlässigkeit, messen, wenn ein Schaum auf der Oberfläche der Flüssigkeit, deren Füllstand gemessen werden soll, vorhanden ist. Die aus dem Stand der Technik bekannten Messvorrichtungen können in der Regel Schaum, der auf einer Flüssigkeitsoberfläche angeordnet ist, detektieren. Falls ein Schaum durch die entsprechende aus dem Stand der Technik bekannte Messvorrichtung detektiert wird, werden in der Regel entsprechende Maßnahmen eingeleitet, um den Schaum zu entfernen, beispielsweise durch Berieseln des Schaums mit einer Flüssigkeit. Anschließend wird der Füllstand der Flüssigkeit gemessen. Die hierin beschriebene Füllstandmessvorrichtung ist, im Gegensatz zu den aus dem Stand der Technik bekannten Füllstandsensoren, nicht auf ein Entfernen des Schaums angewiesen, um den Füllstand der Flüssigkeit zuverlässig messen zu können.

Die hierin beschriebene Füllstandmessvorrichtung ist vorzugsweise dazu eingerichtet, Füllstände von Flüssigkeiten unabhängig von den Eigenschaften des Schaums, beispielsweise der Höhe des Schaums, der Dichte des Schaums, etc., zu messen bzw. zu bestimmen. Die Füllstandmessvorrichtung kann den Füllstand der Flüssigkeit beispielsweise im Wesentlichen unabhängig von einer Menge des Schaums, beispielsweise einer Dicke oder Höhe des Schaums, und/oder der Beschaffenheit des Schaums, beispielsweise einer Dichte und/oder einer Größe von Luftblasen im Schaum, messen bzw. bestimmen.

Das Bestimmen des Füllstands der Flüssigkeit, auf der Schaum angeordnet ist, kann beispielsweise dadurch erfolgen, dass mindestens ein erster Anteil des Messsignals an einem Bereich des Schaumes reflektiert wird. Mindestens ein zweiter Anteil des Messsignals kann sich weiter durch den Schaum ausbreiten und an einem Bereich der Flüssigkeitsoberfläche reflektiert werden. Alternativ kann ein erstes Messsignal, beispielsweise ein erstes Messsignal des Signalgenerators oder ein Messsignal eines ersten Signalgenerators, an einem Bereich des Schaumes reflektiert werden und mindestens ein zweites Messsignal, beispielsweise ein zweites Messsignal des Signalgenerators oder ein Messsignal eines zweiten Signalgenerators, kann sich weiter durch den Schaum ausbreiten und an einem Bereich der Flüssigkeitsoberfläche reflektiert werden.

Die Auswerteinheit kann dazu eingerichtet sein, die jeweils an dem Schaum bzw. an der Flüssigkeitsoberfläche reflektierten Anteile des Messsignals bzw. die jeweils an dem Schaum bzw. an der Flüssigkeitsoberfläche reflektierten Messsignale zu unterscheiden, beispielsweise anhand einer Amplitude des jeweiligen durch den Signalempfänger empfangenen (reflektierten) Messsignals bzw. des jeweiligen durch den Signalempfänger empfangenen (reflektierten) Anteils des Messsignals und/oder einer Zeit, die von der Abgabe des jeweiligen Messignals durch den Signalgenerator bis zur Detektion des (reflektierten) Messsignals bzw. des (reflektierten) Anteils des Messsignals durch den Signalempfänger vergeht. Darauf basierend kann die Auswerteinheit den Füllstand der Flüssigkeit und/oder die Höhe des auf der Flüssigkeitsoberfläche angeordneten Schaumes bestimmen.

Die Füllstandmessvorrichtung bzw. die Auswerteeinheit kann dazu eingerichtet sein, basierend auf dem detektierten Messsignal mindestens eine Eigenschaft des Schaums zu bestimmen. Beispielsweise kann die Füllstandmessvorrichtung bzw. die Auswerteeinheit dazu eingerichtet sein, basierend auf dem detektierten Messsignal, eine Größe der Luftblasen im Schaum, d.h. eine Relativgröße und/oder eine Absolutgröße der Luftblasen im Schaum, und/oder eine Dichte des Schaums zu bestimmen. Beispielsweise kann Schaum mit größeren Luftblasen das Messsignal zumindest teilweise derart reflektieren, dass eine Amplitude des reflektierten Messignals bzw. des reflektierten Anteils des Messignals größer ist als eine Amplitude eines an einem Schaum mit kleineren Luftblasen reflektierten Messsignals bzw. eines reflektierten Anteils des Messignals. Dadurch kann, basierend auf einer detektierten Amplitude des reflektierten Messignals bzw. des reflektierten Anteils des Messignals, eine Größe der Luftblasen, zumindest eine Relativgröße der Luftblasen, bestimmt werden. Alternativ, oder zusätzlich, kann Schaum mit größeren Luftblasen generell zu einer größeren Parameterstreuung zwischen dem an dem Schaum reflektierten Messsignal und dem an der Flüssigkeitsoberfläche reflektierten Messsignal führen als Schaum mit kleineren Luftblasen. Demzufolge kann bei einem Schaum mit kleineren Luftblasen der mindestens einen Parameter zwischen dem an dem Schaum reflektierten Messsignal und dem an der Flüssigkeitsoberfläche reflektierten Messsignal stärker abweichen als bei einem Schaum mit kleineren Luftblasen. Dadurch kann ebenfalls eine Größe der Luftblasen, zumindest eine Relativgröße der Luftblasen, bestimmt werden.

Die Füllstandmessvorrichtung kann dazu eingerichtet sein, zumindest eines der folgenden Materialien, die beispielsweise auf der Flüssigkeit angeordnet sein können, zu detektieren, basierend auf einer Reflektion des Messsignals an dem jeweiligen Material: Bimsstein, Schaumstoff, Schaumgummi, Polystyrol (beispielsweise als Isolations- und/oder Verpackungsmaterial), Montageschaum (beispielsweise zur Montage im Bauwesen, z. B. an Fenstern und/oder Türen), Hartschaumplatten (beispielsweise zur Wärmedämmung im Bauwesen), Ortschaum, Schaumglas, Aerogele, Metallschäume, wie z. B. Aluminiumschaum für hochfeste, aber leichte Metallkonstruktionen, Schaumbeton Sandwichschaum (beispielsweise PVC-Hartschaum) bei Faserverbundwerkstoffen und Luftschokolade. Optional kann die Füllstandmessvorrichtung bzw. die Auswerteeinheit dazu eingerichtet sein, zumindest eine Eigenschaft des jeweiligen Materials zu bestimmen.

Vorzugsweise kann die Füllstandmessvorrichtung dazu eingerichtet sein, Füllstände der Flüssigkeit mit zumindest einem zumindest bereichsweise auf einer Oberfläche der Flüssigkeit angeordneten Schaum unabhängig von Lichtverhältnissen zu messen.

Der Signalempfänger kann dazu eingerichtet sein, mindestens eine Amplitude des Messsignals und eine Zeit, die von der Abgabe des Messignals durch den Signalgenerator bis zur Detektion des Messsignals durch den Signalempfänger vergeht, zu detektieren. Vorzugsweise ist der Signalempfänger dazu eingerichtet, das reflektierte Messsignal abzutasten, vorzugsweise mit einer vorgegebenen Abtastrate. Alternativ kann der Signalempfänger dazu eingerichtet sein, die Abtastrate variabel einzustellen.

Der Bereich des Schaumes, an der die Reflektion bewirkbar ist, kann eine Oberfläche des Schaumes sein.

Die Auswerteeinheit kann dazu eingerichtet sein, zumindest ein Softwareprogramm auszuführen, mithilfe dessen der Füllstand der Flüssigkeit, und optional auch die Höhe des Schaumes, bestimmt werden kann/können. Die Auswerteeinheit kann ferner dazu eingerichtet sein, weitere Parameter, beispielsweise zumindest eine Temperatur, vorzugsweise eine Temperaturverteilung, der Flüssigkeit auszuwerten bzw. zu bestimmen

Vorzugsweise ist der Signalgenerator ein Radarsignalgenerator, der dazu eingerichtet ist, ein Radarsignal zu generieren und in Richtung der Flüssigkeitsoberfläche und des darauf angeordneten Schaums abzugeben. Vorzugsweise ist der Signalempfänger dazu eingerichtet, das Radarsignal nach mindestens einer Reflektion des Radarsignals an der Flüssigkeitsoberfläche und/oder an einem Bereich des Schaumes zu detektieren.

Vorzugsweise ist die Flüssigkeit eine Schmierstoffflüssigkeit, vorzugsweise eine Kühlschmierstoffflüssigkeit, und/oder ein Reinigungsmedium. Weitere Flüssigkeitsarten, beispielsweise Flüssigkeiten für weitere Anwendungen und/oder Zwecke und/oder mit anderen Eigenschaften, sind ebenfalls denkbar im Rahmen der vorliegenden Erfindung.

Vorzugsweise ist die Auswerteeinheit dazu eingerichtet, den Füllstand der Flüssigkeit und/oder die Höhe des auf der Flüssigkeitsoberfläche angeordneten Schaumes basierend auf einer Zeit, die von der Abgabe des Messsignals durch den Signalgenerator bis zum Detektieren des Messsignals durch den Signalempfänger vergeht, zu bestimmen. Beispielsweise kann aus der oben genannten Zeit und einer im Wesentlichen bekannten Ausbreitungsgeschwindigkeit des jeweiligen Messsignals eine Entfernung der Flüssigkeitsoberfläche bzw. des Schaums zu dem Signalgenerator und/oder dem Signalempfänger bestimmt werden. Daraus kann beispielsweise der Füllstand der Flüssigkeit und/oder die Höhe des auf der Flüssigkeitsoberfläche angeordneten Schaumes bestimmt werden.

Vorzugsweise ist die Auswerteeinheit dazu eingerichtet, eine erste Signaleigenschaft und mindestens eine zweite Signaleigenschaft des Messsignals zu detektieren. Vorzugsweise charakterisiert die erste Signaleigenschaft den Füllstand der Flüssigkeit und die zweite Signaleigenschaft charakterisiert die Höhe des Schaumes. Die erste Signaleigenschaft und/oder die zweite Signaleigenschaft kann/können beispielsweise mindestens ein Wert mindestens eines Signalparameters, bspw. eine Amplitude, des Messsignals sein. Beispielsweise kann das entsprechende Messsignal bzw. der entsprechende Anteil des Messsignals, das/der durch den Schaum ausbreitet und an der Flüssigkeitsoberfläche reflektiert wird, stärker gedämpft werden als das entsprechende Messsignal bzw. der entsprechende Anteil des Messsignals, das/der an dem Schaum reflektiert wird. Dadurch kann die Amplitude des entsprechenden Messsignals bzw. des entsprechenden Anteils des Messsignals, das/der durch den Schaum ausbreitet und an der Flüssigkeitsoberfläche reflektiert werden, stärker reduziert werden als das entsprechende Messsignal bzw. der entsprechende Anteil des Messsignals, das/der an dem Schaum reflektiert wird. Dadurch können die entsprechenden reflektierten Messsignale bzw. Anteile des Messsignals einer Reflektion an dem Schaum bzw. einer Reflektion an der Flüssigkeitsoberfläche zugeordnet werden, um darauf basierend den Füllstand der Flüssigkeit und/oder die Höhe des auf der Flüssigkeitsoberfläche angeordneten Schaumes zu bestimmen.

Alternativ können die erste Signaleigenschaft und die zweite Signaleigenschaft unterschiedliche Signaleigenschaften sein, beispielweise eine Frequenz und eine Amplitude.

Vorzugsweise umfasst die erste Signaleigenschaft zumindest eine Amplitude des Messsignals. Alternativ, oder zusätzlich, umfasst die zweite Signaleigenschaft vorzugsweise zumindest eine Amplitude des Messsignals.

Vorzugsweise ist die Auswerteeinheit dazu eingerichtet:
den Füllstand der Flüssigkeit basierend auf einer Zeit, die von der Abgabe des Messsignals durch den Signalgenerator bis zum Detektieren der ersten Signaleigenschaft des Messsignals durch den Signalempfänger vergeht, zu bestimmen; und/oder
die Höhe des auf der Flüssigkeitsoberfläche angeordneten Schaumes basierend auf einer Zeit, die von der Abgabe des Messsignals durch den Signalgenerator bis zum Detektieren der zweiten Signaleigenschaft des Messsignals durch den Signalempfänger vergeht, zu bestimmen. Die oben genannten Zeiten werden auch Laufzeiten der Messsignale genannt.

Die Auswerteeinheit kann dazu eingerichtet sein, die Zeit, die von der Abgabe des Messsignals durch den Signalgenerator bis zum Detektieren der ersten Signaleigenschaft des Messsignals durch den Signalempfänger vergeht, einer Reflektion des Messsignals an der Oberfläche der Flüssigkeit zuzuordnen und die Zeit, die von der Abgabe des Messsignals durch den Signalgenerator bis zum Detektieren der zweiten Signaleigenschaft des Messsignals durch den Signalempfänger vergeht, einer Reflektion des Messsignals an dem Schaum zuzuordnen. In der Regel wird das Messsignal zuerst an dem Schaum reflektiert, da dieser in der Regel näher an dem Signalgenerator angeordnet ist. Demzufolge kann die Zeit, die von der Abgabe des Messsignals durch den Signalgenerator bis zum Detektieren der zweiten Signaleigenschaft des Messsignals durch den Signalempfänger vergeht, kürzer sein als die Zeit, die von der Abgabe des Messsignals durch den Signalgenerator bis zum Detektieren der ersten Signaleigenschaft des Messsignals durch den Signalempfänger vergeht. Darauf basierend kann die Auswerteeinheit dazu eingerichtet sein, die erste Signaleigenschaft des Messsignals und die zweite Signaleigenschaft des Messsignals entsprechend zuzuordnen.

Die Auswerteeinheit kann zusätzlich dazu eingerichtet sein, eine Amplitude des durch den Signalempfänger empfangenen Messsignals bzw. der durch den Signalempfänger empfangenen Messsignalanteile zu bestimmen. Die Auswerteeinheit kann zusätzlich dazu eingerichtet sein, die Amplituden mit den Laufzeiten der Messsignale zu vergleichen, um eine Plausibilität der Messergebnisse zu prüfen. Insbesondere kann die Auswerteeinheit dazu eingerichtet sein, ein Verhältnis der jeweiligen Amplituden der an dem Schaum und an der Flüssigkeit reflektierten Messignale und ein Verhältnis der Laufzeiten der Messsignale zu bestimmen und miteinander zu vergleichen. Die Auswerteeinheit kann dazu eingerichtet sein, die Messergebnisse außer Acht zu lassen, wenn ein Vergleich des Verhältnisses der Amplituden mit dem Verhältnis der Laufzeiten der Messsignale mindestens ein Kriterium nicht erfüllen und/oder mindestens ein Kriterium erfüllen. Beispielsweise kann der oben genannte Vergleich zeigen, dass ein reflektiertes Messignal eine größere Amplitude aufweist, was generell auf eine Reflektion an dem Schaum hindeuten würden. Jedoch könnte das reflektierte Messignal eine längere Laufzeit aufweisen, was einer Reflektion an dem Schaum generell widerspricht. Die Auswerteeinheit kann dazu eingerichtet sein, derartige Messergebnisse außer Acht zu lassen.

Dadurch können beispielsweise Anteile des Messsignals bzw. der Messsignale, die beispielsweise an einer Behälterwand reflektiert werden und dadurch möglicherweise längere Laufzeiten aufweisen können, von der Auswertung ausgeschlossen werden bzw. außer Acht gelassen werden. Dies kann beispielsweise das an dem Schaum reflektierte Messsignal bzw. den an dem Schaum reflektierten Anteil des Messsignals betreffen, da das Messsignal bzw. der Anteil des Messsignals tendenziell an der Oberfläche des Schaumes auf einen breiteren Winkel reflektiert wird, wodurch das reflektierte Messsignal bzw. der reflektierte Anteil des Messsignals zumindest teilweise auf eine Wand des Behälters gerichtet und daran reflektiert werden kann. Somit kann eine Plausibilitätsprüfung von unterschiedlichen Laufzeiten und/oder unterschiedliche Amplituden des Messignals bzw. der Messsignale ermöglicht werden, um die Messgenauigkeit und/oder die Messzuverlässigkeit zu erhöhen.

Vorzugsweise ist die Auswerteeinheit dazu eingerichtet, den Füllstand der Flüssigkeit und/oder die Höhe des auf der Flüssigkeitsoberfläche angeordneten Schaumes zu bestimmen basierend auf:
mindestens einem Verhältnis der ersten Signaleigenschaft zur zweiten Signaleigenschaft; und/oder
mindestens einem Verhältnis der zweiten Signaleigenschaft zur ersten Signaleigenschaft; und/oder
mindestens einem Vergleich der ersten Signaleigenschaft mit der zweiten Signaleigenschaft;

Vorzugsweise ist die Messvorrichtung dazu eingerichtet, den Füllstand der Flüssigkeit und/oder die Höhe des auf der Flüssigkeitsoberfläche angeordneten Schaumes kontinuierlich zu bestimmen.

Vorzugsweise ist die Auswerteeinheit dazu eingerichtet, den Füllstand der Flüssigkeit und die Höhe des auf der Flüssigkeitsoberfläche angeordneten Schaumes basierend auf einem einzigen Messsignal zu bestimmen.

Vorzugsweise ist der Signalgenerator und der Signalempfänger, im Messbetrieb der Füllstandmessvorrichtung, in der Nähe einer Wand eines Behälters, in dem die Flüssigkeit angeordnet ist, anbringbar, bevorzugt in einem Abstand zur Wand von 20 cm oder weniger, bevorzugter in einem Abstand zur Wand von 15 cm oder weniger, bevorzugter in einem Abstand zur Wand von 10 cm oder weniger, am bevorzugtesten in einem Abstand zur Wand von 8 cm oder weniger. Dadurch kann eine Anbringung des Signalgenerators und des Signalempfängers, beispielsweise an der Wand des Behälters, erleichtert werden. Die Füllstandmessvorrichtung kann dazu eingerichtet sein, trotz der oben angegeben Nähe zur Wand des Behälters, eine relativ hohe Messgenauigkeit zu erreichen, d.h. ohne Fehlmessungen, oder zumindest mit einer relativ geringen Anzahl an Fehlermessungen und/oder mit einer relativ geringen Messabweichung. Der Signalgenerator kann dazu eingerichtet sein, einen Einfallswinkel bzw. einen Reflexionswinkel des Messsignals an der Flüssigkeitsoberfläche und/oder an dem Schaum zu bewirken, der eine relativ hohe Messgenauigkeit der Füllstandmessvorrichtung ermöglicht bzw. zumindest erleichtert, trotz einer Anbringung des Signalgenerators und/oder des Signalempfängers in der Nähe der Wand des Behälters, beispielsweise in einem Abstand zur Wand von 20 cm oder weniger.

Vorzugsweise weist die Füllstandmessvorrichtung ferner mindestens eine Kommunikationseinheit auf, die dazu eingerichtet ist, eine Kommunikationsverbindung, vorzugsweise eine kabellose Kommunikationsverbindung, zwischen der Füllstandmessvorrichtung und mindestens einem externen Gerät bereitzustellen (z.B. einem Computer oder Datenverarbeitungssystem), um mindestens ein Ausgangssignal, das den bestimmten Füllstand der Flüssigkeit und/oder die bestimmte Höhe des auf der Flüssigkeitsoberfläche angeordneten Schaumes charakterisiert, an das externe Gerät zu übermitteln, vorzugsweise kabellos.

Vorzugsweise ist die Auswerteeinheit dazu eingerichtet, mindestens einen Algorithmus auszuführen, um den Füllstand der Flüssigkeit und/oder die Höhe des auf der Flüssigkeitsoberfläche angeordneten Schaumes zu bestimmen. Hierzu kann die Auswerteeinheit mindestens einen Prozessor aufweisen, der dazu eingerichtet ist, den Algorithmus auszuführen.

Vorzugsweise weist die Füllstandmessvorrichtung zusätzlich mindestens eine Temperaturmessvorrichtung auf, die dazu eingerichtet, mindestens eine Temperatur zumindest eines Bereichs der Flüssigkeit zu detektieren. Die Temperaturmessvorrichtung kann gemäß einer der hierin beschriebenen Ausführungen konfiguriert sein.

Vorzugsweise ist die Temperaturmessvorrichtung dazu eingerichtet, über einen mehrdimensionalen Bereich der Flüssigkeit, der sich zumindest in zwei Dimensionen erstreckt, vorzugsweise in einer Ebene auf der Flüssigkeitsoberfläche, die Temperatur bzw.

Temperaturen der Flüssigkeit zu bestimmen.

Außerdem ist es eine Aufgabe der vorliegenden Erfindung, eine verbesserte Temperaturmessung von Flüssigkeiten anzugeben.

Diese Aufgabe wird durch eine Temperaturmessvorrichtung gemäß den Merkmalen des unabhängigen Anspruchs 15 gelöst. Vorteilhafte Ausgestaltungen mit zweckmäßigen Weiterbildungen der Erfindung sind in den jeweiligen Unteransprüchen sowie in der nachfolgenden Beschreibung angegeben.

Die Temperaturmessvorrichtung ist zum Messen zumindest einer Temperatur zumindest eines Bereichs einer Flüssigkeit, die in einem Behälter angeordnet ist, eingerichtet.

Die vorstehend zur Anschlussvorrichtung und/oder zur Füllstandmessvorrichtung beschriebenen Ausführungen und/oder Merkmale und/oder Vorteile gelten analog für die Temperaturmessvorrichtung.

Die Temperaturmessvorrichtung kann mindestens einen Temperatursensor zum Detektieren der Temperatur aufweisen. Die Temperaturmessvorrichtung kann dazu eingerichtet sein, die Temperatur bzw. die Temperaturen über einen mehrdimensionalen Bereich der Flüssigkeit, der sich zumindest in zwei Dimensionen erstreckt, vorzugsweise in einer Ebene auf der Flüssigkeitsoberfläche, zu bestimmen.

Im Gegensatz zu bekannten Temperaturmessvorrichtungen aus dem Stand der Technik, die lediglich für punktförmige Messungen ausgelegt sind, stellt die vorliegende Erfindung eine Temperaturmessvorrichtung bereit, die Temperaturen über einen mehrdimensionalen Bereich der Flüssigkeit erfassen kann. Dadurch lassen sich die Temperatur(en) in effizienter und/oder effektiver Weise über einen Bereich der Flüssigkeit bestimmen, beispielsweise um Temperaturverteilungen in der Flüssigkeit bzw. an der Oberfläche der Flüssigkeit erfassen. Dadurch können beispielsweise chemische Reaktionen in der Flüssigkeit und/oder Strömungen der Flüssigkeit im Behälter effizienter und/oder effektiver festgestellt werden.

Vorzugsweise ist die Temperaturmessvorrichtung dazu eingerichtet, die Temperatur bzw. die Temperaturen über den gesamten mehrdimensionalen Bereich der Flüssigkeit im Wesentlichen gleichzeitig zu bestimmen.

Vorzugsweise ist die Flüssigkeit eine Schmierstoffflüssigkeit, vorzugsweise eine Kühlschmierstoffflüssigkeit, und/oder ein Reinigungsmedium. Weitere Flüssigkeitsarten, beispielsweise Flüssigkeiten für weitere Anwendungen und/oder Zwecke und/oder mit Flüssigkeiten mit anderen Eigenschaften, deren Temperatur durch die hierin beschriebene Temperaturmessvorrichtung messbar sind, sind ebenfalls denkbar im Rahmen der vorliegenden Erfindung.

Vorzugsweise weist die Temperaturmessvorrichtung ferner mindestens eine Auswerteeinheit auf, die dazu eingerichtet ist, mindestens eine Bewegung der Flüssigkeit zu bestimmen basierend auf der bestimmten Temperatur bzw. den bestimmten Temperaturen. Vorzugsweise kann die Auswerteinheit anhand der Bewegung eine chemische Reaktion in der Flüssigkeit identifizieren.

Vorzugsweise weist die Temperaturmessvorrichtung ferner mindestens eine Auswerteeinheit auf, die dazu eingerichtet ist, Fremdmedien, beispielsweise Fremdgegenstände, beispielsweise Partikel, in der Flüssigkeit, die in einem Behälter angeordnet ist, festzustellen, basierend auf der bestimmten Temperatur bzw. den bestimmten Temperaturen.

Vorzugsweise weist die Temperaturmessvorrichtung ferner zumindest eine Auswerteeinheit auf, die dazu eingerichtet ist, mindestens eine chemische Reaktion der Flüssigkeit zu bestimmen basierend auf der bestimmten Temperatur bzw. den bestimmten Temperaturen und/oder anhand eines identifizierten Temperaturverteilungs- und/oder Bewegungsprofils.

Vorzugsweise ist die Auswerteinheit dazu eingerichtet, eine Mehrzahl von mehrdimensionalen Temperaturverteilungen miteinander zu vergleichen (insbesondere zweidimensionalen Temperaturverteilungen an der Flüssigkeitsoberfläche), die zeitversetzt ermittelt werden, zu analysieren, und aus der Veränderung der Temperaturverteilungen über die Zeit Angaben zu Flüssigkeitsbewegungen und/oder ablaufende chemische Reaktionen (insbesondere chemische Reaktionen, welche die jeweilige Flüssigkeitsbewegung verursachen) zu machen.

Vorzugsweise ist die Temperaturmessvorrichtung dazu eingerichtet, ein Warnsignal zu generieren, wenn die bestimmte Temperatur einen unteren Schwellwert unterschreitet und/oder einen oberen Schwellwert überschreitet. Der untere Schwellwert und/oder der obere Schwellwert kann/können je nach Anwendung eingestellt werden. Der untere Schwellwert und/oder der obere Schwellwert kann/können fix oder variabel eingestellt werden. Beispielsweise kann die Temperaturmessvorrichtung dazu eingerichtet sein, ein Warnsignal zu generieren, wenn die bestimmte Temperatur oberen Schwellwert von 30° überschreitet.

Die folgende Aspekteliste stellt alternative und/oder zusätzliche Merkmale der Erfindung dar:
1. Eine Anschlussvorrichtung, die an einem Behälter, der zum Aufbewahren zumindest einer Flüssigkeit eingerichtet ist, anbringbar ist, aufweisend:
   mindestens einen Anschlusskörper, vorzugsweise ein Anschlussgehäuse, der vorzugsweise an dem Behälter montierbar ist und der eine Mehrzahl von im oder
   am Anschlusskörper integrierten Anschlussschnittstellen aufweist, wobei jede Anschlussschnittstelle dazu eingerichtet ist, mit einer Funktionsvorrichtung, die mit der Flüssigkeit operativ zusammenwirkbar ist, um mindestens eine Funktion bereitzustellen, in Eingriffsverbindung gebracht zu werden, um die Funktionsvorrichtung an dem Anschlusskörper zu fixieren.
2. Die Anschlussvorrichtung nach Aspekt 1, wobei die Anschlussschnittstellen an und/oder in dem Anschlusskörper integral ausgebildet sind.
3. Die Anschlussvorrichtung nach Aspekt 1 oder 2, aufweisend mindestens eine Messvorrichtung zum Messen mindestens einer Eigenschaft der in dem Behälter angeordneten Flüssigkeit und/oder eines auf der Flüssigkeit angeordneten Schaums und/oder einer weiteren zumindest teilweise in der Flüssigkeit angeordneten Materie, wobei die Messvorrichtung an einer der Anschlussschnittstellen fixierbar ist.
4. Die Anschlussvorrichtung nach Aspekt 3, wobei die mindestens eine Messvorrichtung eine Füllstandmessvorrichtung zum Messen von Füllständen der Flüssigkeit und/oder zum Messen einer Höhe eines auf einer Oberfläche der Flüssigkeit angeordneten Schaumes, vorzugsweise eine Füllstandmessvorrichtung nach einem der Aspekte 19 bis 33, umfasst.
5. Die Anschlussvorrichtung nach Aspekt 3 oder 4, wobei die mindestens eine Messvorrichtung eine Temperaturmessvorrichtung zum Messen zumindest einer Temperatur der Flüssigkeit, die in einem Behälter angeordnet ist, vorzugsweise eine Temperaturmessvorrichtung nach einem der Aspekte 34 bis 40, umfasst.
6. Die Anschlussvorrichtung nach einem der vorhergehenden Aspekte, aufweisend:
   mindestens einen Zuführanschluss zum Anschließen mindestens einer Zuführleitung zum Zuführen von Flüssigkeit in den Behälter, wobei der Zuführanschluss an einer der Anschlussschnittstellen fixierbar ist; und/oder
   mindestens einen Abführanschluss zum Anschließen mindestens einer Abführleitung zum Abführen von Flüssigkeit aus dem Behälter, wobei der Abführanschluss an einer der Anschlussschnittstellen fixierbar ist.
7. Die Anschlussvorrichtung nach einem der vorhergehenden Aspekte, wobei die Anschlussvorrichtung zu einer kohärenten Einheit vormontierbar ist, bevor die Anschlussvorrichtung an dem Behälter angebracht wird.
8. Die Anschlussvorrichtung nach einem dervorhergehenden Aspekte, ferner aufweisend mindestens eine Kommunikationseinheit, die dazu eingerichtet ist, eine Kommunikationsverbindung, vorzugsweise eine kabellose Kommunikationsverbindung, zwischen mindestens einer Komponente der Anschlussvorrichtung und einem externen Gerät (z.B. einem Computer oder Datenverarbeitungssystem) bereitzustellen.
9. Die Anschlussvorrichtung nach einem der Aspekte 6 bis 8, wobei der Zuführanschluss mindestens ein Zuführsteuerelement, vorzugsweise mindestens ein Zuführventil, aufweist, das dazu eingerichtet ist, eine Zufuhr von Flüssigkeit in den Behälter über den Zuführanschluss zu steuern.
10. Die Anschlussvorrichtung nach einem der Aspekte 6 bis 9, wobei der Abführanschluss mindestens ein Abführsteuerelement, vorzugsweise ein Zuführventil, aufweist, das dazu eingerichtet ist, eine Abfuhr von Flüssigkeit aus dem Behälter über den Abführanschluss zu steuern.
11. Die Anschlussvorrichtung nach einem dervorhergehenden Aspekte, ferner aufweisend ein Not-Stopp-Ventil, das dazu eingerichtet ist, eine Zufuhr von Flüssigkeit in den Behälter zu verhindern, oder zumindest zu begrenzen, und/oder eine Abfuhr von Flüssigkeit aus dem Behälter zu veranlassen, wenn ein Füllstand der in dem Behälter angeordneten Flüssigkeit einen Schwellwert, vorzugsweise einen vorbestimmten Schwellwert, überschreitet.
12. Die Anschlussvorrichtung nach Aspekt 11, wobei das Not-Stopp-Ventil stromlos antreibbar ist.
13. Die Anschlussvorrichtung nach einem der Aspekte 9 bis 12, wobei zumindest eines der Ventile, vorzugsweise zumindest das Zuführventil und das Abführventil, vorzugsweise alle Ventile, elektrisch antreibbar ist.
14. Die Anschlussvorrichtung nach einem der Aspekte 6 bis 13, ferner aufweisend:
   mindestens einen Zuführschlauch, der mit dem Zuführanschluss verbindbar ist und sich in einen Innenraum des Behälters erstreckt, wenn die Anschlussvorrichtung an dem Behälter angebracht ist, um Flüssigkeit über den Zuführanschluss in den Behälter zuzuführen; und/oder
   mindestens einen Abführschlauch, der mit dem Abführanschluss verbindbar ist und sich in einen Innenraum des Behälters erstreckt, wenn die Anschlussvorrichtung an dem Behälter angebracht ist, um Flüssigkeit über den Abführanschluss aus dem Behälter abzuführen.
15. Die Anschlussvorrichtung nach Aspekt 14, wobei der Zuführschlauch und/oder der Abführschlauch flexibel und/oder biegsam ausgebildet ist/sind.
16. Die Anschlussvorrichtung nach einem der vorhergehenden Aspekte, aufweisend mindestens einen Filter zum Filtern einer Flüssigkeit, die in dem Behälter angeordnet ist, wobei der Filter an einer der Anschlussschnittstellen fixierbar ist.
17. Die Anschlussvorrichtung nach einem der vorhergehenden Aspekte, wobei die Anschlussvorrichtung einen Stromversorgungsanschluss aufweist, um mindestens eine Komponente der Anschlussvorrichtung, vorzugsweise alle elektrisch angetriebenen Komponenten der Anschlussvorrichtung, mit Strom zu versorgen.
18. Die Anschlussvorrichtung nach einem der Aspekte 9 bis 17, aufweisend eine Steuereinheit, die dazu eingerichtet ist:
   bei einem offenen Zustand des Zuführventils, in dem das Zuführventil eine Zufuhr von Flüssigkeit über den Zuführanschluss in den Behälter zulässt, und einem geschlossenen Zustand des Abführventils, in dem das Abführventil eine Abfuhr von Flüssigkeit über das Abführventil aus dem Behälter verhindert, mindestens einen Soll-Füllstand der Flüssigkeit in dem Behälter in Abhängigkeit von einer Zuflussrate von Flüssigkeit über den Zuführanschluss in den Behälter zu bestimmen;
   den Soll-Füllstand mit dem gemessenen Füllstand der Flüssigkeit in dem Behälter, vorzugsweise kontinuierlich, zu vergleichen; und
   ein Schließsignal zu generieren, um ein Schließen des Zuführventils zu veranlassen, wenn der gemessene Füllstand von dem Soll-Füllstand abweicht, vorzugsweise um zumindest einen vorbestimmten Abweichungswert.
19. Eine Füllstandmessvorrichtung zum Messen von Füllständen zumindest einer Flüssigkeit mit zumindest einem zumindest bereichsweise auf einer Oberfläche der Flüssigkeit angeordneten Schaum, aufweisend:
   mindestens einen Signalgenerator, der dazu eingerichtet ist, mindestens ein Messsignal zu generieren und in Richtung der Flüssigkeitsoberfläche und des darauf angeordneten Schaums abzugeben;
   mindestens einen Signalempfänger, der dazu eingerichtet ist, das Messsignal nach mindestens einer Reflektion des Messsignals an der Flüssigkeitsoberfläche und/oder an einem Bereich des Schaumes zu detektieren; und
   mindestens eine Auswerteeinheit, die dazu eingerichtet ist, einen Füllstand der Flüssigkeit, und optional auch eine Höhe des auf der Flüssigkeitsoberfläche angeordneten Schaumes, basierend auf dem detektierten Messsignal zu bestimmen.
20. Die Füllstandmessvorrichtung nach Aspekt 19, wobei der Signalgenerator ein Radarsignalgenerator ist, der dazu eingerichtet ist, ein Radarsignal zu generieren und in Richtung der Flüssigkeitsoberfläche und des darauf angeordneten Schaums abzugeben, und wobei der Signalempfänger dazu eingerichtet ist, das Radarsignal nach mindestens einer Reflektion des Radarsignals an der Flüssigkeitsoberfläche und/oder an einem Bereich des Schaumes zu detektieren.
21. Die Füllstandmessvorrichtung nach Aspekt 19 oder 20, wobei die Flüssigkeit eine Schmierstoffflüssigkeit, vorzugsweise eine Kühlschmierstoffflüssigkeit, und/ oder ein Reinigungsmedium ist.
22. Die Füllstandmessvorrichtung nach einem der Aspekte 19 bis 21, wobei die Auswerteeinheit dazu eingerichtet ist, den Füllstand der Flüssigkeit und/oder die Höhe des auf der Flüssigkeitsoberfläche angeordneten Schaumes basierend auf einer Zeit, die von der Abgabe des Messsignals durch den Signalgenerator bis zum Detektieren des Messsignals durch den Signalempfänger vergeht, zu bestimmen.
23. Die Füllstandmessvorrichtung nach einem der Aspekte 19 bis 22, wobei die Auswerteeinheit dazu eingerichtet ist, eine erste Signaleigenschaft und mindestens eine zweite Signaleigenschaft des Messsignals zu detektieren, wobei die erste Signaleigenschaft den Füllstand der Flüssigkeit charakterisiert und die zweite Signaleigenschaft die Höhe des Schaumes charakterisiert.
24. Die Füllstandmessvorrichtung Aspekt 23, wobei:
   die erste Signaleigenschaft zumindest eine Amplitude des Messsignals umfasst; und/oder
   die zweite Signaleigenschaft zumindest eine Amplitude des Messsignals umfasst.
25. Die Füllstandmessvorrichtung nach Aspekt 23 oder 24, wobei die Auswerteeinheit dazu eingerichtet ist:
   den Füllstand der Flüssigkeit basierend auf einer Zeit, die von der Abgabe des Messsignals durch den Signalgenerator bis zum Detektieren der ersten Signaleigenschaft des Messsignals durch den Signalempfänger vergeht, zu bestimmen; und/oder
   die Höhe des auf der Flüssigkeitsoberfläche angeordneten Schaumes basierend auf einer Zeit, die von der Abgabe des Messsignals durch den Signalgenerator bis zum Detektieren der zweiten Signaleigenschaft des Messsignals durch den Signalempfänger vergeht, zu bestimmen.
26. Die Füllstandmessvorrichtung nach einem der Aspekte 23 bis 25, wobei die Auswerteeinheit dazu eingerichtet ist, den Füllstand der Flüssigkeit und/oder die Höhe des auf der Flüssigkeitsoberfläche angeordneten Schaumes zu bestimmen basierend auf:
   mindestens einem Verhältnis der ersten Signaleigenschaft zur zweiten Signaleigenschaft; und/oder
   mindestens einem Verhältnis der zweiten Signaleigenschaft zur ersten Signaleigenschaft; und/oder
   mindestens einem Vergleich der ersten Signaleigenschaft mit der zweiten Signaleigenschaft;
27. Die Füllstandmessvorrichtung nach einem der Aspekte 19 bis 26, wobei die Messvorrichtung dazu eingerichtet ist, den Füllstand der Flüssigkeit und/oder die Höhe des auf der Flüssigkeitsoberfläche angeordneten Schaumes kontinuierlich zu bestimmen.
28. Die Füllstandmessvorrichtung nach einem der Aspekte 19 bis 27, wobei die Auswerteeinheit dazu eingerichtet ist, den Füllstand der Flüssigkeit und die Höhe des auf der Flüssigkeitsoberfläche angeordneten Schaumes basierend auf einem einzigen Messsignal zu bestimmen.
29. Die Füllstandmessvorrichtung nach einem der Aspekte 19 bis 28, wobei der Signalgenerator und der Signalempfänger, im Messbetrieb der Füllstandmessvorrichtung, in der Nähe einer Wand eines Behälters, in dem die Flüssigkeit angeordnet ist, anbringbar ist, bevorzugt in einem Abstand zur Wand von 20 cm oder weniger, bevorzugter in einem Abstand zur Wand von 15 cm oder weniger, bevorzugter in einem Abstand zur Wand von 10 cm oder weniger, am bevorzugtesten in einem Abstand zur Wand von 8 cm oder weniger.
30. Die Füllstandmessvorrichtung nach einem der Aspekte 19 bis 29, ferner aufweisend mindestens eine Kommunikationseinheit, die dazu eingerichtet ist, eine Kommunikationsverbindung, vorzugsweise eine kabellose Kommunikationsverbindung, zwischen der Füllstandmessvorrichtung und mindestens einem externen Gerät (z.B. einem Computer oder Datenverarbeitungssystem) bereitzustellen, um mindestens ein Ausgangssignal, das den bestimmten Füllstand der Flüssigkeit und/oder die bestimmte Höhe des auf der Flüssigkeitsoberfläche angeordneten Schaumes charakterisiert, an das externe Gerät zu übermitteln, vorzugsweise kabellos.
31. Die Füllstandmessvorrichtung nach einem der Aspekte 19 bis 30, wobei die Auswerteeinheit dazu eingerichtet ist, mindestens einen Algorithmus auszuführen, um den Füllstand der Flüssigkeit und/oder die Höhe des auf der Flüssigkeitsoberfläche angeordneten Schaumes zu bestimmen.
32. Die Füllstandmessvorrichtung nach einem der Aspekte 19 bis 31, zusätzlich aufweisend mindestens eine Temperaturmessvorrichtung, die dazu eingerichtet, mindestens eine Temperatur zumindest eines Bereichs der Flüssigkeit zu detektieren.
33. Die Füllstandmessvorrichtung nach Aspekt 32, wobei die Temperaturmessvorrichtung dazu eingerichtet ist, über einen mehrdimensionalen Bereich der Flüssigkeit, der sich zumindest in zwei Dimensionen erstreckt, vorzugsweise in einer Ebene auf der Flüssigkeitsoberfläche, die Temperatur bzw. Temperaturen der Flüssigkeit zu bestimmen.
34. Eine Temperaturmessvorrichtung zum Messen zumindest einer Temperatur zumindest eines Bereichs einer Flüssigkeit, die in einem Behälter angeordnet ist, aufweisend mindestens einen Temperatursensor zum Detektieren der Temperatur, wobei die Temperaturmessvorrichtung dazu eingerichtet ist, die Temperatur bzw. die Temperaturen über einen Bereich der Flüssigkeit, der sich entlang mindestens einer Dimension erstreckt, vorzugsweise über einen mehrdimensionalen Bereich der Flüssigkeit, der sich zumindest in zwei Dimensionen erstreckt, vorzugsweise in einer Ebene auf der Flüssigkeitsoberfläche, zu bestimmen.
35. Die Temperaturmessvorrichtung nach Aspekt 34, wobei die Temperaturmessvorrichtung dazu eingerichtet ist, die Temperatur bzw. die Temperaturen über den gesamten mehrdimensionalen Bereich der Flüssigkeit im Wesentlichen gleichzeitig zu bestimmen.
36. Die Temperaturmessvorrichtung nach Aspekt 34 oder 35, wobei die Flüssigkeit eine Schmierstoffflüssigkeit, vorzugsweise eine Kühlschmierstoffflüssigkeit, ist.
37. Die Temperaturmessvorrichtung nach einem der Aspekte 34 bis 36, ferner aufweisend mindestens eine Auswerteeinheit, die dazu eingerichtet ist, mindestens eine Bewegung der Flüssigkeit zu bestimmen basierend auf der bestimmten Temperatur bzw. den bestimmten Temperaturen.
38. Die Temperaturmessvorrichtung nach einem der Aspekte 34 bis 37, ferner aufweisend mindestens eine Auswerteeinheit, die dazu eingerichtet ist, Partikel in der Flüssigkeit, die in einem Behälter angeordnet ist, festzustellen, basierend auf der bestimmten Temperatur bzw. den bestimmten Temperaturen.
39. Die Temperaturmessvorrichtung nach einem der Aspekte 34 bis 38, ferner aufweisend zumindest eine Auswerteeinheit, die dazu eingerichtet ist, mindestens eine chemische Reaktion der Flüssigkeit zu bestimmen basierend auf der bestimmten Temperatur bzw. den bestimmten Temperaturen.
40. Die Temperaturmessvorrichtung nach einem der Aspekte 34 bis 39, wobei die Temperaturmessvorrichtung dazu eingerichtet ist, ein Warnsignal zu generieren, wenn die bestimmte Temperatur einen unteren Schwellwert unterschreitet und/oder einen oberen Schwellwert überschreitet.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.
- Fig. 1: zeigt, in einer perspektivischen und schematischen Ansicht, eine Anschlussvorrichtung gemäß einer Ausführungsform der vorliegenden Erfindung;
- Fig. 2: zeigt, in einer weiteren perspektivischen und schematischen Ansicht, die Anschlussvorrichtung aus Fig. 1;
- Fig. 3: zeigt, in einer schematischen Ansicht von unten, die Anschlussvorrichtung aus Fig. 1 und 2;
- Fig. 4: zeigt, in einer schematischen Seitenansicht, die Anschlussvorrichtung aus Fig. 1 bis 3;
- Fig. 5: zeigt, in einer schematischen Seitenansicht, die Anschlussvorrichtung aus Fig. 1 bis 4, wobei die Anschlussvorrichtung in einem teilweise demontierten Zustand dargestellt ist;
- Fig. 6: zeigt, in einer perspektivischen und schematischen Ansicht, die Anschlussvorrichtung aus Fig. 1 bis 5, wobei die Anschlussvorrichtung in einem teilweise demontierten Zustand dargestellt ist;
- Fig. 7: zeigt, in einer perspektivischen und schematischen Ansicht, die Anschlussvorrichtung aus Fig. 1 bis 6, wobei die Anschlussvorrichtung in einem teilweise demontierten Zustand dargestellt ist;
- Fig. 8: zeigt einen Behälter, wobei eine Anschlussvorrichtung, eine Temperaturmessvorrichtung und eine Füllstandmessvorrichtung an dem Behälter montiert sind.

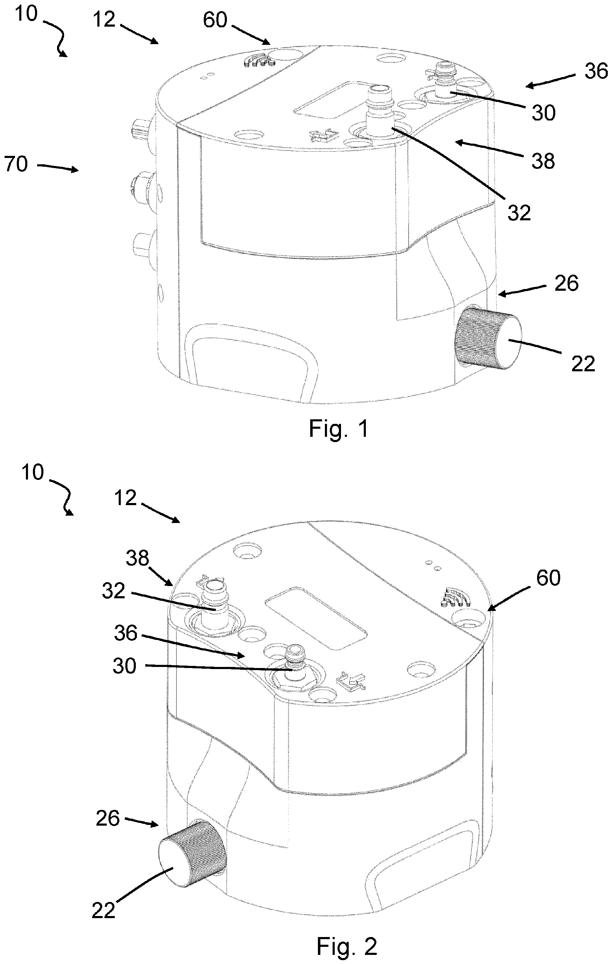

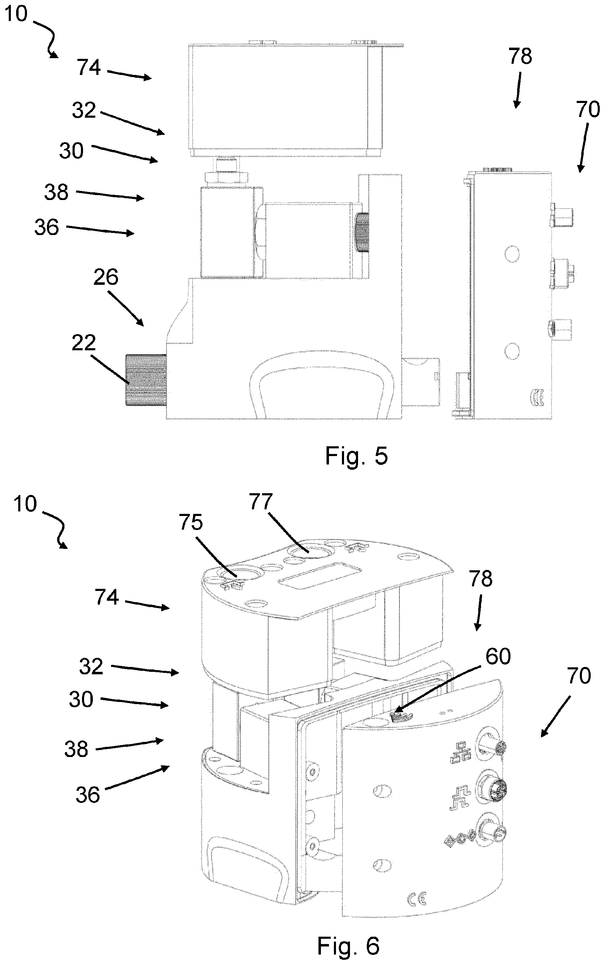

Fig. 1 bis 7 zeigen, in perspektivischen und schematischen Ansichten, eine Anschlussvorrichtung 10, die an einem Behälter, der zum Aufbewahren zumindest einer Flüssigkeit eingerichtet ist, anbringbar ist. Fig. 1 bis 4 zeigen die Anschlussvorrichtung 10 in einem im Wesentlichen montierten Zustand, wohingegen Fig. 5 bis 7 die Anschlussvorrichtung 10 in einem teilweise demontierten Zustand zeigen. Die Anschlussvorrichtung 10 weist mindestens ein Anschlussgehäuse 12 auf, der an dem Behälter montierbar ist. Das Anschlussgehäuse 12 weist eine Mehrzahl von Anschlussschnittstellen auf, die im oder am Anschlussgehäuse 12 integriert sind. Jede Anschlussschnittstelle kann dazu eingerichtet sein, mit einer Funktionsvorrichtung in Eingriffsverbindung gebracht zu werden, um die Funktionsvorrichtung an dem Anschlussgehäuse 12 zu fixieren, beispielsweise durch eine Formschlussverbindung und/oder eine Kraftschlussverbindung. Jede Funktionsvorrichtung kann mit der Flüssigkeit operativ zusammenwirkbar sein, durch Kontakt zwischen der Funktionsvorrichtung und der Flüssigkeit oder kontaktlos, um mindestens eine Funktion bereitzustellen. Die Funktion kann beispielsweise das Messen von Parametern der Flüssigkeit, das Filtern der Flüssigkeit und/oder das Zu- und/oder Abführen der Flüssigkeit in den Behälter bzw. aus dem Behälter.

Gemäß der in Fig. 1 bis 7 gezeigten Ausführungsform ist beispielsweise mindestens ein Filter 22 vorgesehen, der zum Filtern einer Flüssigkeit, die in dem Behälter angeordnet ist, eingerichtet ist. Der Filter 22 ist an einer ersten Anschlussschnittstelle 26 montiert und dient als Funktionsvorrichtung im Rahmen der vorliegenden Erfindung. Der Filter 22 kann dazu eingerichtet sein, zugeführte Flüssigkeit und/oder abgeführte Flüssigkeit zu filtern.

Ferner kann die Anschlussvorrichtung 10 mindestens einen Zuführanschluss 30, an dem mindestens einer Zuführleitung anschließbar ist, um dem Behälter Flüssigkeit zuzuführen, und mindestens einen Abführanschluss 32, an dem mindestens einer Abführleitung anschließbar ist, um Flüssigkeit aus dem Behälter abzuführen, aufweisen. Der Zuführanschluss 30 und der Abführanschluss 32 sind an entsprechenden Anschlussschnittstellen 36, 38 der Anschlussvorrichtung 10 fixiert.

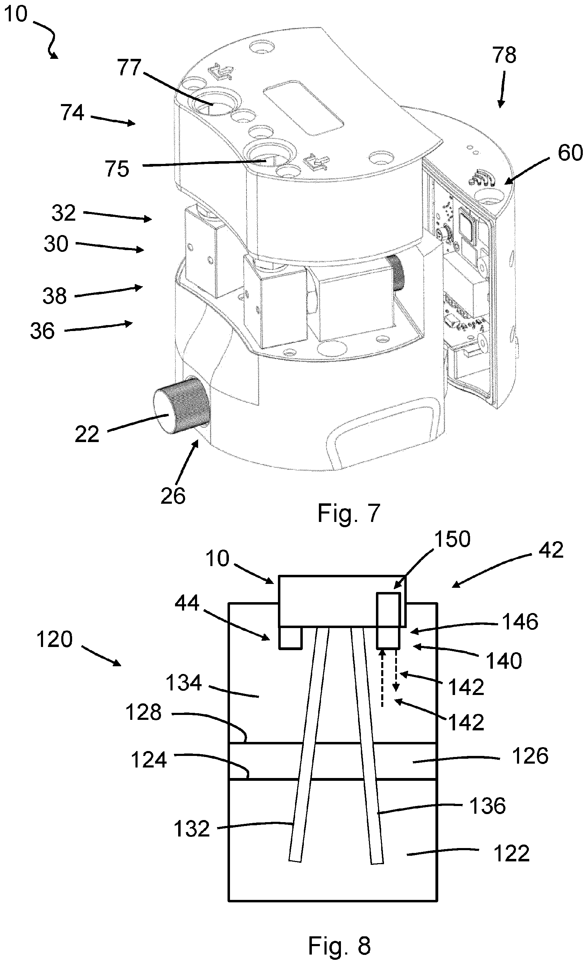

Zusätzlich kann die Anschlussvorrichtung 10 mindestens einen Einlass 39 aufweisen, an dem mindestens ein Einlassrohr oder -schlauch anbringbar ist, um Flüssigkeit über die Zuführleitung und den Zuführanschluss 30 in die Anschlussvorrichtung 10 und anschließend über den Einlass 39 und den Einlassschlauch in den Behälter zu leiten (siehe auch Fig. 8). Der Einlass 39 kann hierzu mit dem Zuführanschluss 30 fluidverbunden sein. Ferner kann die Anschlussvorrichtung 10 mindestens einen Auslass 41 aufweisen, an dem mindestens ein Auslassrohr oder -schlauch anbringbar ist, um Flüssigkeit über den Auslassschlauch, den Auslass 41, den Abführanschluss 32 und die Abführleitung aus dem Behälter abzuführen und beispielsweise mindestens einer Applikation zuzuführen (siehe auch Fig. 8). Der Auslass 41 kann hierzu mit dem Abführanschluss 32 fluidverbunden sein.

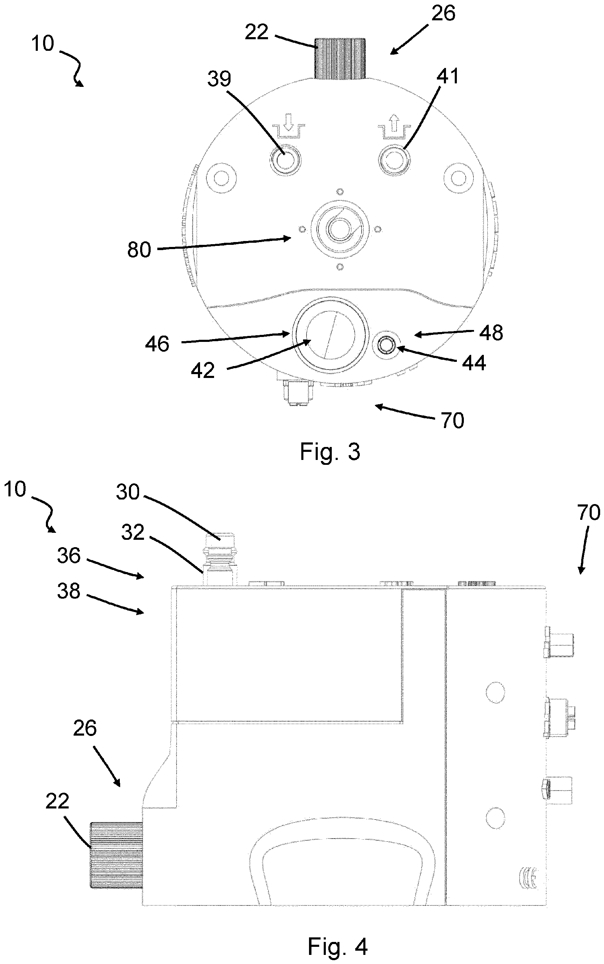

Außerdem kann die Anschlussvorrichtung 10 mindestens eine Messvorrichtung zum Messen mindestens einer Eigenschaft der in dem Behälter angeordneten Flüssigkeit und/oder eines auf der Flüssigkeit angeordneten Schaums und/oder einer weiteren zumindest teilweise in der Flüssigkeit angeordneten Materie aufweisen. Gemäß der in Fig. 1 bis 7 gezeigten Ausführungsform sind entsprechend zumindest eine Füllstandmessvorrichtung 42 und eine Temperaturmessvorrichtung 44 vorgesehen, die an entsprechenden Anschlussschnittstellen 46, 48 angebracht sind (siehe Fig. 3). Weitere, oder alternative, Messvorrichtungen können ebenfalls an der Anschlussvorrichtung 10 vorgesehen werden.

Die Anschlussvorrichtung 10 kann zusätzlich mindestens eine Kommunikationseinheit 60 aufweisen, die dazu eingerichtet ist, eine Kommunikationsverbindung, vorzugsweise eine kabellose Kommunikationsverbindung, zwischen mindestens einer Komponente der Anschlussvorrichtung 10 und mindestens einem externen Gerät, beispielsweise einem Smartphone, Tablet, oder PC, bereitzustellen. Alternativ, oder zusätzlich, kann die Kommunikationseinheit 60 dazu eingerichtet sein, eine Kommunikationsverbindung zwischen Komponenten der Anschlussvorrichtung bereitzustellen, beispielsweise zwischen mehreren Sensoren der Anschlussvorrichtung 10. Die Kommunikationsverbindung 60 kann dazu dienen, Informationen, Daten und/oder Signale auszutauschen bzw. zu übertagen. Eine kabellose Kommunikationsverbindung kann beispielsweise über Wifi, Bluetooth, LoRa (Long Range), NarrowBand, und/oder NarrowBand IoT bereitgestellt werden.

Ferner kann die Anschlussvorrichtung 10 mehrere Versorgungsanschlüsse und/oder Kommunikationsanschlüsse 70 aufweisen. Die Versorgungsanschlüsse und/oder Kommunikationsanschlüsse können beispielsweise mindestens einen Stromversorgungsanschluss zum Versorgen mindesten einer Komponente mit Strom, und/oder einen Datenübertragungsanschluss zum Übertragen von Daten und/oder Signalen von der Anschlussvorrichtung 10 an mindestens ein externes Gerät und/oder von mindestens einem externen Gerät an die Anschlussvorrichtung 10, beispielweise über zumindest ein Übertragungskabel, das an einem der Versorgungsanschlüsse und/oder Kommunikationsanschlüsse 70 anschließbar ist, aufweisen.

Das Anschlussgehäuse 12 kann einteilig, d.h., als integrale Einheit, ausgebildet sein. Alternativ kann das Anschlussgehäuse 12 aus mehreren zusammengesetzten Komponenten aufgebaut sein, wie in Fig. 1 bis 7 gezeigt. In beiden Fällen kann die Anschlussvorrichtung 10 als kohärente, kompakte und einheitliche Montageeinheit eingerichtet sein, um einheitlich, vorzugsweise einschließlich der Funktionsvorrichtungen, an dem Behälter montierbar zu sein.

Das Anschlussgehäuse 12 kann eine abnehmbare Abdeckung 74 aufweisen, welche den Zuführanschluss 30, den Abführanschluss 32 und die Anschlussschnittstellen 36, 38 zumindest teilweise abdeckt, im montierten Zustand der Abdeckung 74 (siehe Fig. 5 bis 7). Die Abdeckung 74 kann Öffnungen 75, 77 aufwiesen, durch die sich der Zuführanschluss 30 und der Abführanschluss 32 jeweils erstrecken können, im montierten Zustand der Abdeckung 74. Ferner können die Füllstandmessvorrichtung 42 und die Temperaturmessvorrichtung 44 in einem abnehmbaren Sensormodul 78 angeordnet sein. Die Kommunikationseinheit 60 und die Versorgungsanschlüsse und/oder Kommunikationsanschlüsse 70 können ebenfalls in dem Sensormodul 78 integriert sein.

Die Anschlussvorrichtung 10 kann außerdem eine Anschlussschnittstelle 80 zum Montieren eines (nicht gezeigten). Not-Stopp-Ventils an der Anschlussvorrichtung 10 aufweisen. Das Not-Stopp-Ventil kann dazu eingerichtet sein, eine Zufuhr von Flüssigkeit in den Behälter zu verhindern, oder zumindest zu begrenzen, und/oder eine Abfuhr von Flüssigkeit aus dem Behälter zu veranlassen, beispielsweise über eine entsprechende Elektronik, wenn ein Füllstand der in dem Behälter angeordneten Flüssigkeit einen Schwellwert, vorzugsweise einen vorbestimmten Schwellwert, überschreitet.

Durch das Vorsehen einer Mehrzahl von im bzw. am Anschlussgehäuse 12 integrierten Anschlussschnittstellen 26, 36, 38, 46, 48 zum Anbringen einer Mehrzahl von Funktionsvorrichtungen 22, 30, 32, 42, 44 an dem Behälter kann eine kompakte und einheitliche Montageeinheit für alle, oder zumindest für mehrere, Funktionsvorrichtungen, die an dem Behälter angebracht werden müssen/sollen, bereitgesellt werden. Dadurch kann der Montageaufwand zum Anbringen der entsprechenden Funktionsvorrichtungen 22, 30, 32, 42, 44 an dem Behälter reduziert werden. Außerdem kann dadurch ein Ausbau der Funktionsvorrichtungen 22, 30, 32, 42, 44, oder zumindest einer Funktionsvorrichtung, beispielsweise zu Wartungs- und/oder Austauschzwecken, erleichtert werden.

Ferner kann für entsprechende elektrische und/oder elektronische Komponenten, beispielsweise für die Füllstandmessvorrichtung 42, die Temperaturmessvorrichtung 44 und/oder elektrisch antreibbare Ventile, eine Verkabelung hierfür in der Anschlussvorrichtung 10 angeordnet und/oder bereits zumindest teilweise vorinstalliert sein. Dies kann den Montageaufwand bzw. den Verkabelungsaufwand sowie das Risiko von Kabelbeschädigungen reduzieren gegenüber den Lösungen aus dem Stand der Technik, bei denen die entsprechenden Funktionsvorrichtungen, und entsprechend deren Verkabelung, falls vorhanden, einzeln an dem Behälter angebracht und konfiguriert werden.

In anderen Worten, kann eine Mehrzahl der oben genannten Anschluss- und/oder Versorgungsschnittstellen als eine gemeinsame Anschlussvorrichtung 10 vormontiert werden, bevor die Anschlussvorrichtung 10 an dem Behälter montiert wird. Eine oder mehrere Ventile und/oder Fluidverbindungen der Anschlussvorrichtung sind dabei zumindest teilweise oder vollständig innerhalb eines Gehäuses der Anschlussvorrichtung 10 angeordnet bzw. werden von dem Gehäuse der Anschlussvorrichtung 10 umgeben.

Fig. 8 zeigt einen Behälter 120, in dem eine Flüssigkeit 122 angeordnet ist. Auf einer Flüssigkeitsoberfläche 124 der Flüssigkeit 122 ist ein Schaum 126 mit einer Schaumoberfläche 128 angeordnet. Eine Anschlussvorrichtung, beispielsweise die Anschlussvorrichtung 10 aus den Fig. 1 bis 7, ist an einer Oberseite, beispielsweise einem Deckel, des Behälters 120 montiert. Die Anschlussvorrichtung 10 weist die Füllstandmessvorrichtung 42 und die Temperaturmessvorrichtung 44 auf, die an einer jeweiligen Anschlussschnittstelle 46, 48 der Anschlussvorrichtung 10 fixiert sind, wie in Fig. 1 bis 7 gezeigt und oben bereits beschrieben.

Außerdem kann mindestens ein Zuführschlauch 132 vorgesehen sein, der mit dem Zuführanschluss 30 fluidverbunden ist und sich in einen Innenraum 134 des Behälters 120 erstreckt, um Flüssigkeit über den Zuführanschluss 30 in den Behälter 120 zuzuführen. Ferner kann mindestens ein Abführschlauch 136 vorgesehen sein, der mit dem Abführanschluss 32 fluidverbunden ist und sich in den Innenraum 134 des Behälters 120 erstreckt, um Flüssigkeit über den Abführanschluss 32 aus dem Behälter 120 abzuführen. Vorzugsweise ist/sind der Zuführschlauch 132 und/oder der Abführschlauch 136 flexibel und/oder biegsam ausgebildet. Der Zuführschlauch 132 kann beispielsweise mit dem Einlass 39 verbunden sein und der Abführschlauch 136 kann mit dem Auslass 41 verbunden sein (siehe Fig. 3).

Die Füllstandmessvorrichtung 42 kann mindestens einen Signalgenerator 140 aufweisen, der dazu eingerichtet ist, mindestens ein Messsignal 142 zu generieren und in Richtung der Flüssigkeitsoberfläche 124 und des darauf angeordneten Schaums 126 abzugeben. Zusätzlich kann die Füllstandmessvorrichtung 42 mindestens einen Signalempfänger 146 aufweisen, der dazu eingerichtet ist, das Messsignal 142 nach mindestens einer Reflektion des Messsignals 142 an der Flüssigkeitsoberfläche 124 und/oder an einem Bereich des Schaumes 126 zu detektieren. In der in den Fig. 1 bis 7 gezeigten Ausführungsform sind der Signalgenerator 140 und der Signalempfänger 146 in einer Messeinheit integriert. Alternativ können der Signalgenerator 140 und der Signalempfänger 146 separat ausgebildet sein und/oder an diskreten Positionen der Anschlussvorrichtung 10 und/oder voneinander beabstandet angeordnet sein.

Außerdem kann die Füllstandmessvorrichtung 42 mindestens eine Auswerteeinheit 150 aufweisen, die dazu eingerichtet ist, einen Füllstand der Flüssigkeit 122 und eine Höhe des auf der Flüssigkeitsoberfläche 124 angeordneten Schaumes 126 basierend auf dem detektierten Messsignal 142 zu bestimmen.

Die Temperaturmessvorrichtung 44 kann dazu eingerichtet sein, die Temperatur bzw. die Temperaturen über einen mehrdimensionalen Bereich der Flüssigkeit 122, der sich zumindest in zwei Dimensionen erstreckt, vorzugsweise in einer Ebene auf der Flüssigkeitsoberfläche 124, zu erfassen. Mit anderen Worten, die Temperaturmessvorrichtung 44 kann dazu eingerichtet sein, ein 2D-Wärmetemperaturbild in zumindest einem Bereich der Flüssigkeit 122, vorzugsweise an der Oberfläche 124 der Flüssigkeit 122, zu erfassen. Die Temperaturmessvorrichtung 44 ist hierbei nicht nur lediglich für punktförmige Messungen ausgelegt, sondern kann die Temperatur(en) in effizienter und/oder effektiver Weise über einen Bereich der Flüssigkeit 122 bestimmen, vorzugsweise gleichzeitig, beispielsweise um Temperaturverteilungen in der Flüssigkeit 122 bzw. an der Oberfläche 124 der Flüssigkeit 122. Dadurch können beispielsweise chemische Reaktionen in der Flüssigkeit und/oder Strömungen der Flüssigkeit 122 im Behälter 120 effizienter und/oder effektiver festgestellt werden.

## Patentansprüche

1. Eine Anschlussvorrichtung (10), die an einem Behälter (120), der zum Aufbewahren zumindest einer Flüssigkeit (122) eingerichtet ist, anbringbar ist, aufweisend:
mindestens ein Anschlussgehäuse (12), das an dem Behälter montierbar ist und eine Mehrzahl von im oder am Anschlussgehäuse (12) integrierten Anschlussschnittstellen (26, 36, 38, 46, 48) aufweist, wobei jede Anschlussschnittstelle (26, 36, 38, 46, 48) dazu eingerichtet ist, mit einer Funktionsvorrichtung (22, 30, 32, 42, 44, 132, 136), die mit der Flüssigkeit (122) operativ zusammenwirkbar ist, um mindestens eine Funktion bereitzustellen, in Eingriffsverbindung gebracht zu werden, um die Funktionsvorrichtung (22, 30, 32, 42, 44, 132, 136) an dem Anschlussgehäuse (12) zu fixieren.

2. Die Anschlussvorrichtung (10) nach Anspruch 1, zusätzlich aufweisend:
mindestens einen Zuführanschluss (30) zum Anschließen mindestens einer Zuführleitung zum Zuführen von Flüssigkeit in den Behälter (120), wobei der Zuführanschluss (30) an einer der Anschlussschnittstellen (36) angebracht ist;
mindestens ein Zuführventil, das dazu eingerichtet ist, eine Zufuhr von Flüssigkeit in den Behälter (120) über den Zuführanschluss (30) zu steuern, wobei das Zuführventil zumindest teilweise im Anschlussgehäuse (12) angeordnet ist;
mindestens einen Abführanschluss (32) zum Anschließen mindestens einer Abführleitung zum Abführen von Flüssigkeit aus dem Behälter (120), wobei der Abführanschluss (32) an einer der Anschlussschnittstellen (38) angebracht ist;
mindestens ein Abführventil, das dazu eingerichtet ist, eine Abfuhr von Flüssigkeit aus dem Behälter (120) über den Abführanschluss (32) zu steuern, wobei das Abführventil zumindest teilweise im Anschlussgehäuse (12) angeordnet ist;
mindestens eine Messvorrichtung (42, 44) zum Messen mindestens einer Eigenschaft der in dem Behälter (120) angeordneten Flüssigkeit (122) und/oder eines auf der Flüssigkeit (122) angeordneten Schaums (126) und/oder einer weiteren zumindest teilweise in der Flüssigkeit (122) angeordneten Materie, wobei die Messvorrichtung (42, 44) an einer der Anschlussschnittstellen (26, 36, 38, 46, 48) angebracht ist; und
mindestens eine Kommunikationseinheit, die dazu eingerichtet ist, eine Kommunikationsverbindung zwischen dem Zuführventil und/oder dem Abführventil und/oder der Messvorrichtung und einem externen Gerät bereitzustellen, wobei die Kommunikationseinheit zumindest teilweise in dem Anschlussgehäuse (12) angeordnet ist.

3. Die Anschlussvorrichtung (10) nach Anspruch 2, wobei die mindestens eine Messvorrichtung eine Füllstandmessvorrichtung (42) zum Messen von Füllständen der Flüssigkeit (122) und/oder zum Messen einer Höhe eines auf einer Oberfläche (124) der Flüssigkeit (122) angeordneten Schaumes (126) umfasst.

4. Die Anschlussvorrichtung (10) nach Anspruch 2 oder 3, wobei die mindestens eine Messvorrichtung eine Temperaturmessvorrichtung (44) zum Messen zumindest einer Temperatur der Flüssigkeit (122), die in einem Behälter (120) angeordnet ist, umfasst.

5. Die Anschlussvorrichtung (10) nach einem der Ansprüche 2 bis 4, aufweisend:
mindestens einen Einlass (39), an dem mindestens ein Einlassrohr oder Einlassschlauch (132) anbringbar ist, um Flüssigkeit über den Zuführanschluss (30) in den Behälter (120) zu leiten, wobei die Anschlussvorrichtung (10) eine Einlass-Fluidverbindung aufweist, die den Zuführanschluss (30) und den Einlass (39) verbindet, und die Einlass-Fluidverbindung zumindest teilweise durch das Anschlussgehäuse (12) verläuft; und
mindestens einen Auslass (41), an dem mindestens ein Auslassrohr oder Auslassschlauch (136) anbringbar ist, um Flüssigkeit aus dem Behälter (120) zu leiten, wobei die Anschlussvorrichtung (10) eine Auslass-Fluidverbindung aufweist, die den Abführanschluss (32) und den Auslass (41) verbindet, und die Auslass-Fluidverbindung zumindest teilweise durch das Anschlussgehäuse (12) verläuft.

6. Die Anschlussvorrichtung (10) nach Anspruch 5, zusätzlich aufweisend den Einlassschlauch (132) und/oder den Auslassschlauch (136), wobei der Einlassschlauch (132) und/oder der Auslassschlauch (136) flexibel und/oder biegsam ausgebildet ist/sind.

7. Die Anschlussvorrichtung (10) nach einem der vorhergehenden Ansprüche, wobei die Anschlussvorrichtung (10) zu einer kohärenten Einheit vormontierbar ist, bevor die Anschlussvorrichtung (10) an dem Behälter (120) angebracht wird.

8. Eine Füllstandmessvorrichtung (42) zum Messen von Füllständen zumindest einer Flüssigkeit (122) mit zumindest einem zumindest bereichsweise auf einer Oberfläche (124) der Flüssigkeit (122) angeordneten Schaum (126), aufweisend:
mindestens einen Signalgenerator (140), der dazu eingerichtet ist, mindestens ein Messsignal (142) zu generieren und in Richtung der Flüssigkeitsoberfläche (124) und des darauf angeordneten Schaums (126) abzugeben;
mindestens einen Signalempfänger (146), der dazu eingerichtet ist, das Messsignal (142) nach mindestens einer Reflektion des Messsignals (142) an der Flüssigkeitsoberfläche (124) und/oder an einem Bereich des Schaumes (126) zu detektieren; und
mindestens eine Auswerteeinheit (150), die dazu eingerichtet ist, einen Füllstand der Flüssigkeit (122) und eine Höhe des auf der Flüssigkeitsoberfläche (124) angeordneten Schaumes (126) basierend auf dem detektierten Messsignal (142) zu bestimmen.

9. Die Füllstandmessvorrichtung (42) nach Anspruch 8, wobei die Auswerteeinheit (150) dazu eingerichtet ist, den Füllstand der Flüssigkeit (122) und/oder die Höhe des auf der Flüssigkeitsoberfläche (124) angeordneten Schaumes (126) basierend auf einer Zeit, die von der Abgabe des Messsignals (142) durch den Signalgenerator (140) bis zum Detektieren des Messsignals (142) durch den Signalempfänger (146) vergeht, zu bestimmen.

10. Die Füllstandmessvorrichtung (42) nach Anspruch 8 oder 9, wobei die Auswerteeinheit (150) dazu eingerichtet ist, eine erste Signaleigenschaft und mindestens eine zweite Signaleigenschaft des Messsignals (142) zu detektieren, wobei die erste Signaleigenschaft den Füllstand der Flüssigkeit (122) charakterisiert und die zweite Signaleigenschaft die Höhe des Schaumes (126) charakterisiert.

11. Die Füllstandmessvorrichtung (42) nach Anspruch 10, wobei:
die erste Signaleigenschaft zumindest eine Amplitude des Messsignals (142) umfasst; und/oder
die zweite Signaleigenschaft zumindest eine Amplitude des Messsignals (142) umfasst.

12. Die Füllstandmessvorrichtung (42) nach Anspruch 10 oder 11, wobei die Auswerteeinheit dazu eingerichtet ist:
den Füllstand der Flüssigkeit (122) basierend auf einer Zeit, die von der Abgabe des Messsignals (142) durch den Signalgenerator (140) bis zum Detektieren der ersten Signaleigenschaft des Messsignals (142) durch den Signalempfänger (146) vergeht, zu bestimmen; und/oder
die Höhe des auf der Flüssigkeitsoberfläche (124) angeordneten Schaumes (126) basierend auf einer Zeit, die von der Abgabe des Messsignals (142) durch den Signalgenerator (140) bis zum Detektieren der zweiten Signaleigenschaft des Messsignals (142) durch den Signalempfänger (146) vergeht, zu bestimmen.

13. Die Füllstandmessvorrichtung (42) nach einem der Ansprüche 10 bis 12, wobei die Auswerteeinheit dazu eingerichtet ist, den Füllstand der Flüssigkeit (122) und/oder die Höhe des auf der Flüssigkeitsoberfläche (124) angeordneten Schaumes (126) zu bestimmen basierend auf:
mindestens einem Verhältnis der ersten Signaleigenschaft zur zweiten Signaleigenschaft; und/oder
mindestens einem Verhältnis der zweiten Signaleigenschaft zur ersten Signaleigenschaft; und/oder
mindestens einem Vergleich der ersten Signaleigenschaft mit der zweiten Signaleigenschaft;

14. Die Füllstandmessvorrichtung (42) nach einem der Ansprüche 8 bis 13, zusätzlich aufweisend mindestens eine Temperaturmessvorrichtung (44), die dazu eingerichtet, mindestens eine Temperatur zumindest eines Bereichs der Flüssigkeit (122) zu detektieren, vorzugsweise wobei die Temperaturmessvorrichtung (44) dazu eingerichtet ist, über einen mehrdimensionalen Bereich der Flüssigkeit (122), der sich zumindest in zwei Dimensionen erstreckt, vorzugsweise in einer Ebene auf der Flüssigkeitsoberfläche (124), die Temperatur bzw. Temperaturen der Flüssigkeit (122) zu bestimmen.

15. Behälter (120) mit einer Temperaturmessvorrichtung (44) zum Messen zumindest einerTemperatur zumindest eines Bereichs einer Flüssigkeit (122), die in dem Behälter (120) angeordnet ist, aufweisend mindestens einen Temperatursensor zum Detektieren der Temperatur, wobei die Temperaturmessvorrichtung (44) dazu eingerichtet ist, die Temperatur bzw. die Temperaturen über einen mehrdimensionalen Bereich der Flüssigkeit (122), der sich zumindest in zwei Dimensionen erstreckt, vorzugsweise in einer Ebene auf der Flüssigkeitsoberfläche (124), zu bestimmen.
